# EUROPEAN PATENT SPECIFICATION

(11) **EP 2 865 959 B1**
(45) Date of publication and mention of the grant of the patent: **16.10.2019**
(21) Application number: 13806763.2
(22) Date of filing: 26.04.2013
(51) Int. Cl.: G05D 23/19, F24F 11/00, F24F 11/30, F24F 120/10, F24F 11/62, F24F 11/70

(54) **AIR-CONDITIONING SYSTEM**
KLIMATISIERUNGSSYSTEM
SYSTÈME DE CLIMATISATION

(30) Priority: 22.06.2012 JP 2012140529
(43) Date of publication of application: 29.04.2015
(73) Proprietor: Mitsubishi Electric Corporation, Tokyo 100-8310 (JP)
(72) Inventor: MAEDA, Kazuo, Tokyo 100-8310 (JP)
(74) Representative: Mewburn Ellis LLP
(86) International application number: PCT/JP2013/062348
(87) International publication number: WO 2013/190911

(56) References cited:
- EP-A2- 2 357 418
- JP-A- H0 829 541
- JP-A- H05 203 216
- JP-A- 2003 259 148
- JP-A- 2005 106 355
- JP-A- 2007 081 904
- JP-A- 2007 132 610
- JP-A- 2011 133 167
- US-A- 5 344 068
- US-A1- 2009 065 596
- US-A1- 2010 019 051
- US-A1- 2012 097 748

## Description

### Technical Field

The present invention relates to an air-conditioning system.

### Background Art

A known air-conditioning system is configured to control a plurality of air-conditioning apparatuses at a set time in accordance with set operation contents on the basis of a preset operation schedule of low-power consumption (see, for example, Patent Literature 1).

Further, a known air-conditioning system is configured to control an air-conditioning apparatus on the basis of a detection result of a human detection sensor provided in the air-conditioning apparatus, and a preset operation schedule (see, for example, Patent Literature 2).

Furthermore, a known air-conditioning system is configured to control an air-conditioning apparatus on the basis of a detection result of a human detection sensor installed in a room (see, for example, Patent Literature 3).

### Citation List

### Patent Literature

Patent Literature 1: Japanese Unexamined Patent Application Publication No. 2011-112298 (Claim 1)
Patent Literature 2: Japanese Unexamined Patent Application Publication No. 2011-85280 (Paragraphs [0018] to [0130])
Patent Literature 3: Japanese Unexamined Patent Application Publication No. 2000-171075 (Claim 1)

US2009/0065596 discloses a system and method for increasing building space comfort using wireless devices.

### Summary of Invention

### Technical problem

In the known air-conditioning system (Patent Literature 1), however, while an air-conditioning apparatus is controlled based on the low-power consumption operation schedule, processing of determination as to the presence or absence of a person in a room is not incorporated. Therefore, control of the air-conditioning apparatus to match actual activities of a person is not performed.

Thus, there is a possibility of not being able to provide an air-conditioned comfortable space with reduced energy consumption.

Further, in the known air-conditioning system (Patent Literature 2), while an air-conditioning apparatus is controlled to match actual activities of a person on the basis of a human detection sensor for detecting the presence or absence of a person, the human detection sensor is provided in the air-conditioning apparatus, and it is therefore impossible to increase the installed number of human detection sensors for detecting the presence or absence of a person.

Thus, there is a possibility of not being able to install in an air-conditioned space a necessary number of sensors for confirming the presence or absence of a person.

Furthermore, in the known air-conditioning system (Patent Literature 3), while the number of human detection sensors for detecting the presence or absence of a person may be increased, the human detection sensors which are installed in a room are used, and it is therefore impossible to readily increase the installed number of human detection sensors for detecting the presence or absence of a person or to readily change the installed positions of human detection sensors for detecting the presence or absence of a person.

Thus, there is a possibility of not being able to arrange sensors for confirming the presence or absence of a person at appropriate positions in an air-conditioned space.

As a result, there is a problem that it is impossible to arrange a necessary number of sensors for detecting the presence or absence of a person at appropriate positions and to provide an air-conditioned comfortable space while reducing energy consumption.

The present invention has been made to solve the above problems, and it is an object of the present invention to provide an air-conditioning system in which a necessary number of sensors for confirming the presence or absence of a person may be arranged at appropriate positions and an air-conditioned comfortable space may be provided while reducing energy consumption.

### Solution to Problem

An air-conditioning system according to claim 1.

### Advantageous Effects of Invention

According to the present invention, by providing a sensor for detecting the presence or absence of a person on a remote controller, a necessary number of sensors for confirming the presence or absence of a person may be arranged at appropriate positions, and an air-conditioned comfortable space may be provided while reducing energy consumption.

### Brief Description of Drawings

Fig. 1 is a diagram illustrating an example of the schematic configuration of an air-conditioning system 11 installed in a building 1 in Embodiment 1 of the present invention.
Fig. 2 is a diagram illustrating an example of the configuration of a refrigerant circuit 12 of an air-conditioning apparatus in Embodiment 1 of the present invention.
Fig. 3 is a diagram illustrating an example of the internal configuration of a heat-source-side control section 71 in Embodiment 1 of the present invention.
Fig. 4 is a diagram illustrating an example of the internal configuration of load-side control sections 72a to 72f in Embodiment 1 of the present invention.
Fig. 5 is a diagram illustrating an example of the configuration of a room in the case where a habitable room space 22a is viewed from above in Embodiment 1 of the present invention.
Fig. 6 is a diagram illustrating an example of the configuration of a room in the case where a habitable room space 22d is viewed from above in Embodiment 1 of the present invention.
Fig. 7 is a diagram illustrating an example of the external configuration of a remote controller 73 in Embodiment 1 of the present invention.
Fig. 8 is a diagram illustrating an example of a schedule setting screen displayed on a display unit 201 in Embodiment 1 of the present invention.
Fig. 9 is a diagram illustrating an example of the internal configuration of the remote controller 73 in Embodiment 1 of the present invention.
Fig. 10 is a diagram illustrating an example of control information in the case where a schedule stored in a memory 501 is being executed in Embodiment 1 of the present invention.
Fig. 11 is a flowchart for explaining a control example of the heat-source-side control section 71 during execution of a schedule in Embodiment 1 of the present invention.
Fig. 12 is a diagram illustrating an example of control information before and after execution of a schedule stored in the memory 501 in Embodiment 1 of the present invention.
Fig. 13 is a flowchart for explaining a control example of the heat-source-side control section 71 before and after execution of a schedule in Embodiment 1 of the present invention.
Fig. 14 is a diagram illustrating an example of control information in the case where a person is detected before execution of a schedule in a running mode stored in the memory 501 in Embodiment 1 of the present invention.
Fig. 15 is a diagram for explaining in a chronological order a control example of the heat-source-side control section 71 in the case where a person is detected before execution of a schedule in the running mode in Embodiment 1 of the present invention.
Fig. 16 is a diagram illustrating an example of control information in the case where no person is detected after execution of a schedule in the running mode stored in the memory 501 in Embodiment 1 of the present invention.
Fig. 17 is a diagram for explaining in a chronological order a control example of the heat-source-side control section 71 in the case where no person is detected after execution of a schedule in the running mode in Embodiment 1 of the present invention.
Fig. 18 is a diagram for explaining in a chronological order the details of a control example of the heat-source-side control section 71 in the case where no person is detected after execution of a schedule in the running mode in Embodiment 1 of the present invention.
Fig. 19 is a diagram for explaining in a chronological order the details of a control example of the heat-source-side control section 71 in the case where a person is detected before execution of a schedule in the running mode in Embodiment 1 of the present invention.
Fig. 20 is a diagram for explaining in a chronological order the details of a control example of the heat-source-side control section 71 in the case where a person is detected after execution of a schedule in the running mode in Embodiment 1 of the present invention.
Fig. 21 is a diagram for explaining in a chronological order the details of a control example of the heat-source-side control section 71 in the case where no person is detected before execution of a schedule in a stopped mode in Embodiment 1 of the present invention.
Fig. 22 is a diagram for explaining in a chronological order the details of a control example of the heat-source-side control section 71 in the case where a person is detected before execution of a schedule in the stopped mode in Embodiment 1 of the present invention.
Fig. 23 is a diagram for explaining in a chronological order the details of a control example of the heat-source-side control section 71 in the case where a person is detected after execution of a schedule in the stopped mode in Embodiment 1 of the present invention.
Fig. 24 is a diagram illustrating an example of a learning rule for room occupancy patterns stored in the memory 501 in Embodiment 2 of the present invention.
Fig. 25 is a state transition diagram for explaining an example of control of a processor 601 based on the learning rule for room occupancy patterns in Embodiment 2 of the present invention.
Fig. 26 is a diagram illustrating an example of person's presence/absence confirmation patterns stored in the memory 501 using a human detection sensor 401 in Embodiment 3 of the present invention.
Fig. 27 is a diagram for explaining a state where a person exits from a room 111 during execution of a schedule in the running mode in Embodiment 3 of the present invention.
Fig. 28 is a diagram for explaining a state where a person enters the room 111 during execution of a schedule in the running mode in Embodiment 3 of the present invention.
Fig. 29 is a diagram for explaining a state where a person is present in the room 111 during execution of a schedule in the running mode in Embodiment 3 of the present invention.
Fig. 30 is a diagram for explaining a state where a person exits from the room 111 during execution of a schedule in the stopped mode in Embodiment 3 of the present invention.
Fig. 31 is a diagram for explaining a state where a person enters the room 111 during execution of a schedule in the stopped mode in Embodiment 3 of the present invention.
Fig. 32 is a diagram for explaining a state where no person is present in the room 111 during execution of a schedule in the stopped mode in Embodiment 3 of the present invention.
Fig. 33 is a diagram illustrating an example of the external configuration of the remote controller 73 in Embodiment 4 of the present invention.
Fig. 34 is a diagram illustrating an example of the internal configuration of the remote controller 73 in Embodiment 4 of the present invention.
Fig. 35 is a diagram illustrating an example of person's presence/absence confirmation patterns stored in the memory 501 using an illuminance sensor 801 in Embodiment 4 of the present invention.
Fig. 36 is a flowchart for explaining an example of control of the processor 601 for the human detection sensor 401 in Embodiment 5 of the present invention.

### Description of Embodiments

Embodiments of the present invention will be described in detail hereinafter with reference to the drawings.

### Embodiment 1.

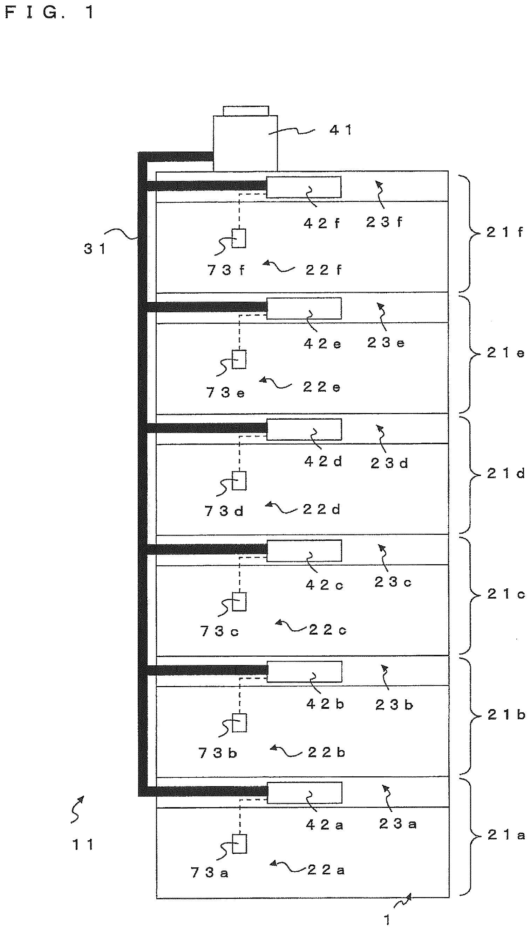

Fig. 1 is a diagram illustrating an example of the schematic configuration of an air-conditioning system 11 installed in a building 1 in Embodiment 1 of the present invention.

As illustrated in Fig. 1, the building 1 is a six-story building and includes the air-conditioning system 11.

Specifically, the building 1 forms a space 21a as a first-floor configuration, a space 21b as a second-floor configuration, a space 21c as a third-floor configuration, a space 21d as a fourth-floor configuration, a space 21e as a fifth-floor configuration, and a space 21f as a fifth-floor construction.

When the spaces 21a to 21f are not particularly distinguished from one another, they are each called a space 21.

In the space 21a, a habitable room space 22a and an attic space 23a are formed.

In the space 21b, a habitable room space 22b and an attic space 23b are formed.

In the space 21c, a habitable room space 22c and an attic space 23c are formed.

In the space 21d, a habitable room space 22d and an attic space 23d are formed.

In the space 21e, a habitable room space 22e and an attic space 23e are formed.

In the space 21f, a habitable room space 22f and an attic space 23f are formed.

When the habitable room spaces 22a to 22f are not particularly distinguished from one another, they are each called a habitable room space 22.

Further, when the attic spaces 23a to 23f are not particularly distinguished from one another, they are each called an attic space 23.

The configuration of the building 1 described above is merely an example, and the configuration is not limited to this.

The air-conditioning system 11 includes a heat-source-side unit 41 and load-side units 42a to 42f. The heat-source-side unit 41 and the load-side units 42a to 42f are connected via a refrigerant pipe 31.

The heat-source-side unit 41 is, for example, installed on the rooftop of the building 1.

The load-side unit 42a is, for example, installed in the attic space 23a.

The load-side unit 42b is, for example, installed in the attic space 23b.

The load-side unit 42c is, for example, installed in the attic space 23c.

The load-side unit 42d is, for example, installed in the attic space 23d.

The load-side unit 42e is, for example, installed in the attic space 23e.

The load-side unit 42f is, for example, installed in the attic space 23f.

When the load-side units 42a to 42f are not particularly distinguished from one another, they are each called a load-side unit 42.

Further, the numbers of the heat-source-side units 41 and the load-side units 42 are not particularly limited.

The air-conditioning system 11 includes remote controllers 73a to 73f.

The remote controller 73a forms, via a wired medium or a wireless medium, a logical connection relationship with the load-side unit 42a.

The remote controller 73b forms, via a wired medium or a wireless medium, a logical connection relationship with the load-side unit 42b.

The remote controller 73c forms, via a wired medium or a wireless medium, a logical connection relationship with the load-side unit 42c.

The remote controller 73d forms, via a wired medium or a wireless medium, a logical connection relationship with the load-side unit 42d.

The remote controller 73e forms, via a wired medium or a wireless medium, a logical connection relationship with the load-side unit 42e.

The remote controller 73f forms, via a wired medium or a wireless medium, a logical connection relationship with the load-side unit 42f.

When the remote controllers 73a to 73f are not particularly distinguished from one another, they are each called a remote controller 73.

Further, the number and the installation positions of the remote controllers 73 are not particularly limited.

For example, a plurality of remote controllers 73 may be installed in the habitable room space 22b. In this case, each of the remote controllers 73 may, for example, be installed on a corresponding one of the walls forming the habitable room space 22b.

In short, the air-conditioning system 11 includes the heat-source-side unit 41, the load-side units 42, the remote controllers 73, and the like.

Further, the air-conditioning apparatus includes the heat-source-side unit 41, the load-side units 42, and the like.

That is, the air-conditioning system 11 includes the air-conditioning apparatus, the remote controllers 73, and the like.

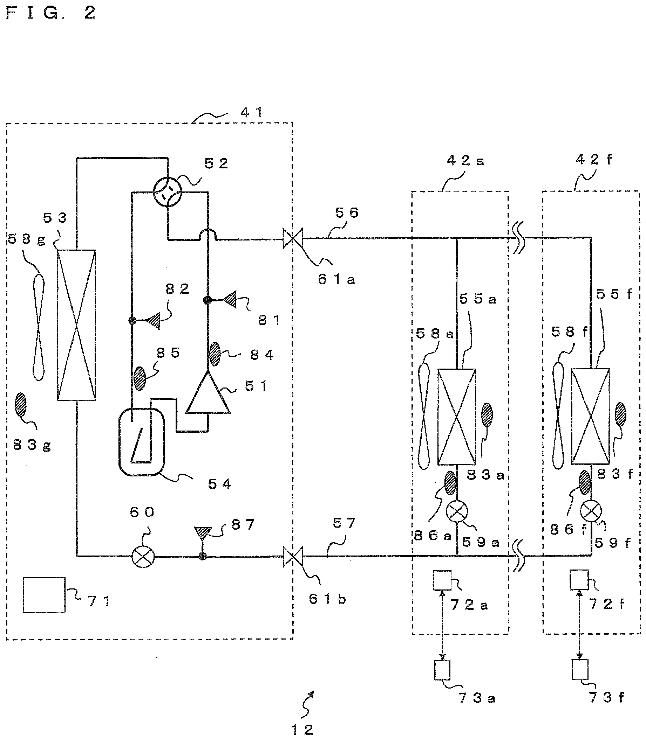

Fig. 2 is a diagram illustrating an example of the configuration of the refrigerant circuit 12 of an air-conditioning apparatus in Embodiment 1 of the present invention.

The heat-source-side unit 41 includes, as a main circuit, a compressor 51, a four-way valve 52, a heat-source-side heat exchanger 53, an accumulator 54, and a second expansion device 60 whose opening degree is variable, which are connected sequentially.

The load-side unit 42a includes a load-side heat exchanger 55a and a first expansion device 59a whose opening degree is variable.

The load-side unit 42f includes a load-side heat exchanger 55f and a first expansion device 59f whose opening degree is variable.

Explanations of the load-side units 42b to 42e are omitted here. However, the load-side units 42b to 42e have configurations similar to the load-side unit 42a and the load-side unit 42f.

The heat-source-side unit 41 and the load-side units 42a to 42f are connected by a first connection pipe 56 and a second connection pipe 57 via valves 61a and 61b.

When the valves 61a and 61b are not particularly distinguished from each other, they are each called a valve 61.

The first connection pipe 56 and the second connection pipe 57 illustrated in Fig. 2 are accommodated in the refrigerant pipe 31 illustrated in Fig. 1.

The refrigerant circuit 12 circulates a refrigerant through the compressor 51, the four-way valve 52, the load-side heat exchangers 55a to 55f, the first expansion devices 59a to 59f, the second expansion device 60, the heat-source-side heat exchanger 53, and the accumulator 54.

The "first expansion devices 59a to 59f" and the "second expansion device 60" correspond to "expansion means" of the present invention.

The heat-source-side heat exchanger 53 is provided with a fan 58g that blows air.

The load-side heat exchangers 55a to 55f are provided with fans 58a to 58f that blows air.

The fans 58a to 58g each include a centrifugal fan, a multi-blade fan, or the like, which is driven by a DC motor (not illustrated), and are capable of adjusting the amount of air to be blown.

When the fans 58a to 58g are not particularly distinguished from one another, they are each called a fan 58.

The compressor 51 is a compressor whose operation capacity is variable. The compressor 51 includes, for example, a positive displacement compressor driven by a motor which is controlled by an inverter.

The valves 61a and 61b each include, for example, a valve, such as a ball valve, an opening/closing valve, or an operation valve, which is capable of opening and closing operations.

In the air-conditioning apparatus in Embodiment 1, fluid with which a refrigerant exchanges heat is air. However, the fluid is not particularly limited to air in the present invention. The fluid may be, for example, water, a refrigerant, brine, or the like. Further, a supply device supplying the fluid with which a refrigerant exchanges heat may be a pump or the like.

In short, as long as a heat-pump air-conditioning apparatus is used, there is no limit to a supply device in particular.

In Embodiment 1, descriptions are given on the configuration of the case where six load-side units 42 are provided. However, the present invention is not limited to this. The number of the load-side units 42 may be more than two and less than six, or more than seven. Further, the load-side units 42 may have different capacities from small to large or may have the same capacity. Alternatively, among the total units, plural units may have the same capacity and the remaining plural units may have different capacities.

In short, the capacities of the individual load-side units 42 are not limited in particular.

Furthermore, descriptions are given on the assumption that, in Embodiment 1, the second expansion device 60 and a liquid pipe pressure sensor 87 (described later) are configured to be built in the heat-source-side unit 41. However, the present invention is not limited to this.

The second expansion device 60 and the liquid pipe pressure sensor 87 only need to be provided in the flow passage between the first expansion devices 59a to 59f and the heat-source-side heat exchanger 53. For example, the second expansion device 60 and the liquid pipe pressure sensor 87 may be configured to be provided in the flow passage of the second connection pipe 57 which connects the valve 61b and the load-side units 42a to 42f.

There is no limit in particular to the type of the refrigerant which circulates through the refrigerant circuit 12 of the air-conditioning apparatus in Embodiment 1, and any type of refrigerant may be used. For example, natural refrigerants, such as carbon dioxide (CO2), hydrocarbon, and helium, and other substitute refrigerants, such as R407C and R404A, which do not contain chlorine, as well as R410A, may be used.

In Embodiment 1, descriptions are given on a configuration of the refrigerant circuit 12 which includes the four-way valve 52 so that switching between a heating operation and a cooling operation may be performed. However, the present invention is not limited to this in particular. For example, the configuration may be such that only a heating operation (including an air-blowing operation) is performed without the four-way valve 52. Further, in Embodiment 1, descriptions are given on the case where the accumulator 54 is provided that stores an excess refrigerant. However, the present invention is not limited to this in particular. The configuration may be such that the accumulator 54 is not included.

Next, sensors and the like will be described.

A discharge temperature sensor 84 for detecting the temperature of a refrigerant is installed on the discharge side of the compressor 51.

A suction temperature sensor 85 for detecting the temperature of a refrigerant flowing into the accumulator 54 is installed on the inlet side of the accumulator 54.

The discharge temperature sensor 84 and the suction temperature sensor 85 are installed in such a way that either they are in contact with the refrigerant pipe or they are inserted into the refrigerant pipe, and they detect the temperature of the refrigerant flowing through the refrigerant pipe.

An outdoor ambient air temperature for which the heat-source-side heat exchanger 53 is to be installed, that is, the temperature of air with which the heat-source-side heat exchanger 53 exchanges heat, is detected by an air temperature sensor 83g.

Heat exchange temperature sensors 86a to 86f for detecting the temperature of a refrigerant flowing into the first expansion devices 59a to 59f during a heating operation are provided on the outlet side of the load-side heat exchangers 55a to 55f.

Ambient air temperatures of the attic spaces 23a to 23f where the load-side heat exchangers 55a to 55f are to be installed, that is, the temperatures of air with which the load-side heat exchangers 55a to 55f exchange heat, are detected by air temperature sensors 83a to 83f.

A discharge pressure sensor 81 for detecting the pressure of a refrigerant discharged from the compressor 51 is installed on the discharge side of the compressor 51. Further, a suction pressure sensor 82 for detecting the pressure of a refrigerant sucked into the compressor 51 is installed on the refrigerant pipe between the accumulator 54 and the four-way valve 52.

A liquid pipe pressure sensor 87 for detecting the pressure of a refrigerant flowing into the second expansion device 60 is installed on the refrigerant pipe between the second expansion device 60 and the valve 61b.

In Embodiment 1, as illustrated in Fig. 2, it is possible to detect, by providing the suction pressure sensor 82 and the suction temperature sensor 85 on the refrigerant pipe between the accumulator 54 and the four-way valve 52, the degree of superheat of a refrigerant on the inlet side of the accumulator 54.

The reason why the suction temperature sensor 85 is positioned at the inlet side of the accumulator 54 is to achieve an operation in which the liquid refrigerant does not return to the accumulator 54 by controlling the degree of superheat of the refrigerant on the inlet side of the accumulator 54.

The position of the suction pressure sensor 82 is not particularly limited to the position illustrated in Fig. 2. The suction pressure sensor 82 may be arranged in any place as long as it is arranged in a section between the four-way valve 52 and the suction side of the compressor 51.

Further, by converting the pressure of the discharge pressure sensor 81 to a saturation temperature, it is possible to obtain a condensing temperature of the refrigeration cycle.

When the air temperature sensors 83a to 83g are not particularly distinguished from one another, they are each called an air temperature sensor 83.

When the heat exchange temperature sensors 86a to 86f are not particularly distinguished from one another, they are each called a heat exchange temperature sensor 86.

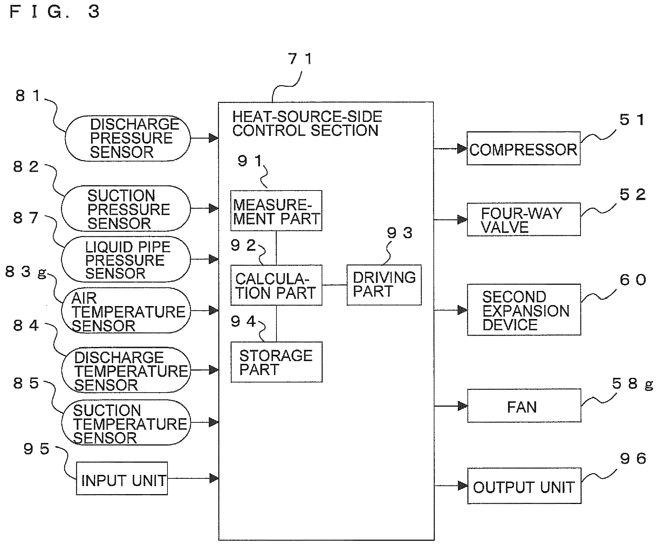

Fig. 3 is a diagram illustrating an example of the internal configuration of a heat-source-side control section 71 in Embodiment 1 of the present invention.

Further, Fig. 3 illustrates a connection configuration of sensors, actuators, and the like which are connected to the heat-source-side control section 71.

The heat-source-side control section 71 is configured to control the entire air-conditioning apparatus, and is built, for example, in the heat-source-side unit 41.
The heat-source-side control section 71 includes a measurement part 91, a calculation part 92, a driving part 93, and a storage part 94.

The measurement part 91 is configured to cause various sensors, such as the discharge pressure sensor 81, the suction pressure sensor 82, the liquid pipe pressure sensor 87, the air temperature sensor 83g, the discharge temperature sensor 84, and the suction temperature sensor 85, to measure temperatures, pressure, and the like.

The calculation part 92 is configured to perform calculation processing, such as comparison and determination, based on the measurement result measured by the measurement part 91, and supply the calculation result obtained from the calculation processing to the storage part 94, where necessary.

The driving part 93 is configured to control driving of the compressor 51, the four-way valve 52, the second expansion device 60, the fan 58g, and the like.

The driving part 93 controls driving of the compressor 51, the second expansion device 60, the fan 58g, and the like, based on, for example, the calculation result of the calculation part 92.

Further, the driving part 93 controls driving of various devices, such as the first expansion devices 59a to 59f and the fans 58a to 58f, which are connected to load-side control sections 72a to 72f, which will be described later, by supplying a control instruction to the load-side control sections 72a to 72f, through, for example, an output unit 96 which will be described in detail later.

The measurement part 91, the calculation part 92, and the driving part 93 each include, for example, a microprocessor unit. However, they do not necessarily include a microprocessor unit in particular.

The storage part 94 is configured to store a calculation result by the calculation part 92, a predetermined constant, an approximate expression and various tables for calculating physical property values of a refrigerant (for example, a saturation pressure and saturation temperature), and the like, and it is possible to provide the stored information for reference, or rewrite the stored information as necessary.

The storage part 94 includes, for example, a semiconductor memory or the like. However, the storage part 94 does not necessarily include a semiconductor memory in particular.

The output unit 96 is an output interface that outputs image data which is obtained by image conversion from various processing results by the heat-source-side control section 71, and displays the image data on an LED, a monitor, or the like, which is not illustrated.

Further, the output unit 96 is an output interface that outputs modulation data which is modulated from various processing results by the heat-source-side control section 71 and that supplies the various processing results to a remote place by supplying the modulation data through communication means, such as a telephone line, a LAN line, or a radio, which is not illustrated.

The input unit 95 is an input interface that demodulates various signals generated by the remote controller 73 and sent through the load-side control sections 72a to 72f, which will be described later, and supplies the demodulated signals to the heat-source-side control section 71.

Further, the input unit 95 is an input interface that performs code conversion of operation input information from various switches (not illustrated) on a substrate and that supplies the information to the heat-source-side control section 71.

Furthermore, the input unit 95 is an input interface that demodulates various communication data supplied through communication means, such as a telephone line, a LAN line, or a radio, which is not illustrated, and supplies the data to the heat-source-side control section 71.

In short, the heat-source-side control section 71 functions as a main control section of the air-conditioning apparatus, and performs cooperative processing by generating various control instructions and performing mutual communication with the load-side control sections 72a to 72f, which function as sub-control sections of the air-conditioning apparatus.

The "heat-source-side control section 71" corresponds to an "air-conditioning control section" of the present invention.

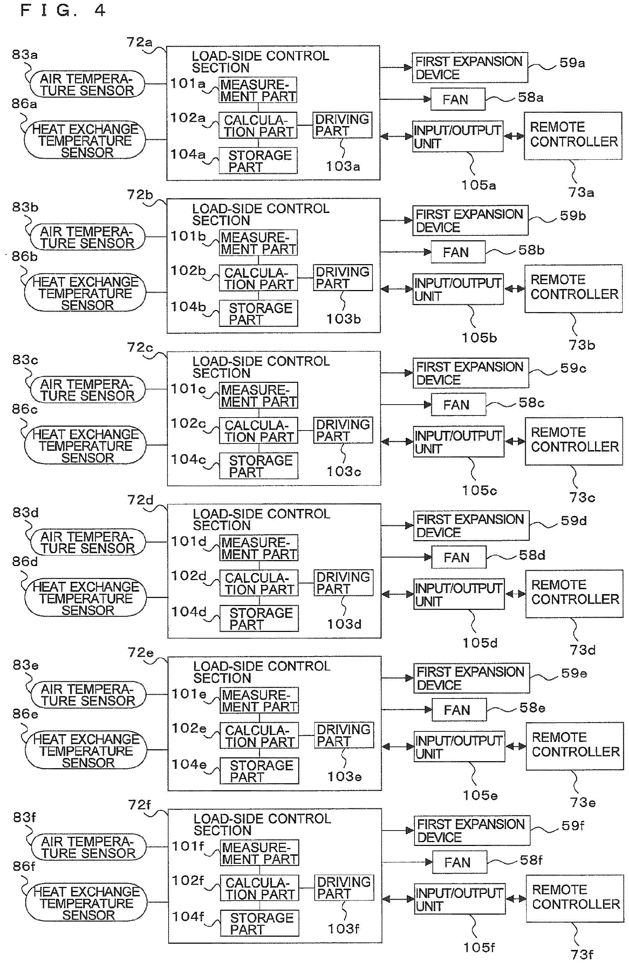

Fig. 4 is a diagram illustrating an example of the internal configuration of the load-side control sections 72a to 72f in Embodiment 1 of the present invention.

Further, Fig. 4 illustrates a connection configuration of sensors, actuators, and the like which are connected to the load-side control sections 72a to 72f.

The load-side control section 72a will be explained.

The load-side control section 72a is configured to control the air-conditioning apparatus as a sub-control section, and is built, for example, in the load-side unit 42a. The load-side control section 72a includes a measurement part 101a, a calculation part 102a, a driving part 103a, and a storage part 104a.

The measurement part 101a is configured to cause various sensors, such as the air temperature sensor 83a and the heat exchange temperature sensor 86a, to measure temperatures.

The calculation part 102a is configured to perform calculation processing, such as comparison and determination, based on the measurement result measured by the measurement part 101a, and supply the calculation result obtained from the calculation processing to the storage part 104a, where necessary.

The driving part 103a is configured to control driving of the first expansion device 59a, the fan 58a, and the like.

The driving part 103a controls driving of the first expansion device 59a, the fan 58a, and the like, based on, for example, the calculation result of the calculation part 102a.

Further, the driving part 103a controls driving of various devices, such as the first expansion devices 59a to 59f and the fans 58a to 58f, which are connected to the load-side control section 72a, in accordance with a control instruction supplied by the heat-source-side control section 71 described above, through, for example, an input/output unit 105a, which will be described in detail later.

The measurement part 101a, the calculation part 102a, and the driving part 103a each include, for example, a microprocessor unit. However, they do not necessarily include a microprocessor unit in particular.

The storage part 104a is configured to store a calculation result by the calculation part 102a, a predetermined constant, an approximate expression and various tables for calculating physical property values of a refrigerant (for example, a saturation pressure and saturation temperature), and the like, and it is possible to provide the stored information for reference or rewrite the stored information as necessary.

Further, the storage part 104a is configured to accumulate various signals from the remote controller 73a, which will be described in detail later.

The storage part 104a includes, for example, a semiconductor memory or the like. However, the storage part 104a does not necessarily include a semiconductor memory in particular.

The input/output unit 105a is an input/output interface that outputs image data which is obtained by image conversion from various processing results by the load-side control section 72a and that displays the image data on an LED, a monitor, or the like, which is not illustrated.

Further, the input/output unit 105a is an input/output interface that outputs modulation data which is modulated from various processing results by the load-side control section 72a and that supplies the various processing results to a remote place by supplying the modulation data through communication means, such as a telephone line, a LAN line, or a radio, which is not illustrated.

Furthermore, the input/output unit 105a is an input/output interface that demodulates various control instructions sent through the heat-source-side control section 71 described above and that supplies the instructions to the load-side control section 72a.

Moreover, the input/output unit 105a is an input/output interface that performs code conversion of operation input information from various switches (not illustrated) on the substrate and that supplies the information to the load-side control section 72a.

Additionally, the input/output unit 105a is an input/output interface that demodulates various communication data which is supplied through communication means, such as a telephone line, a LAN line, or a radio, which is not illustrated, and that supplies the demodulated data to the load-side control section 72a.

Furthermore, the input/output unit 105a is an input/output interface that receives various signals from the remote controller 73a, performs code conversion of the received various signals, and supplies the converted various signals to the load-side control section 72a.

In the above descriptions, an example in which the input/output unit 105a receives various signals from the remote controller 73a is explained. However, the input/output unit 105a is not necessarily configured as described above in particular. For example, various signals from any of the remote controllers 73b to 73f may be received, and the above-described processing may be performed.

The load-side control sections 72b to 72f have the same configurations and functions as those of the load-side control section 72a, and therefore, explanations of those same configurations and functions will be omitted.

When the load-side control sections 72b to 72f are not particularly distinguished from one another, they are each called a load-side control section 72.

In short, the load-side control section 72 functions as a sub-control section of the air-conditioning apparatus, and performs cooperative processing by generating various control instructions and performing mutual communication with the heat-source-side control section 71, which functions as a main control section of the air-conditioning apparatus.

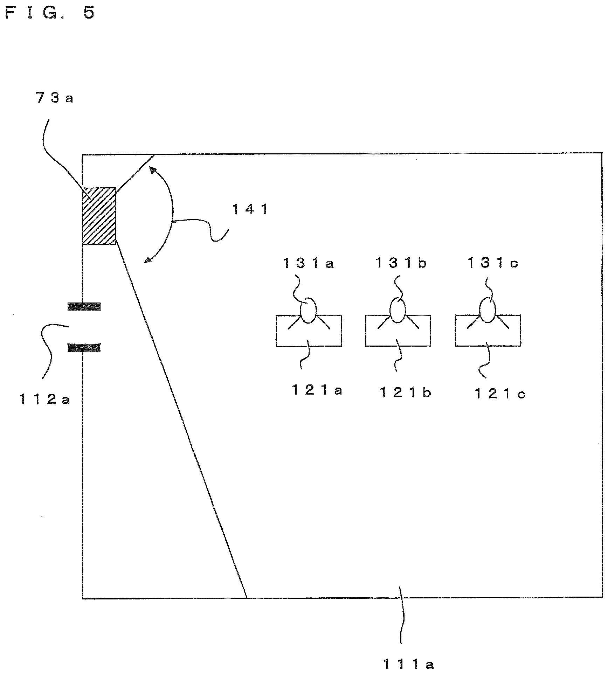

Fig. 5 is a diagram illustrating an example of the configuration of a room in the case where the habitable room space 22a is viewed from above in Embodiment 1 of the present invention.

A room 111a is provided inside the habitable room space 22a. Specifically, the room 111a is a specific space assigned from the habitable room space 22a. The assigned specific space is provided with a plurality of walls, and a part of the plurality of walls is provided with a doorway 112a.

Likewise, rooms 111b to 111f are provided inside the other habitable room spaces 22b to 22f.

When the rooms 111a to 111f are not particularly distinguished from one another, they are each called a room 111.

When the doorways 112a to 112f are not particularly distinguished from one another, they are each called a doorway 112.

The room 111a is provided with the remote controller 73a on a part of a wall side thereof.

In the room 111a, desks 121a to 121c are arranged, with a person 131a seated at the desk 121a, a person 131b seated at the desk 121b, and a person 131c seated at the desk 121c.

When the desks 121a to 121c are not particularly distinguished from one another, they are each called a desk 121.

Further, when the persons 131a to 131c are not particularly distinguished from one another, they are each called a person 131.

The remote controller 73a is provided with a human detection sensor 401, which will be described in detail later.

The human detection sensor 401 has a function for a detection range 141. That is, the human detection sensor 401 detects a person within the detection range 141.

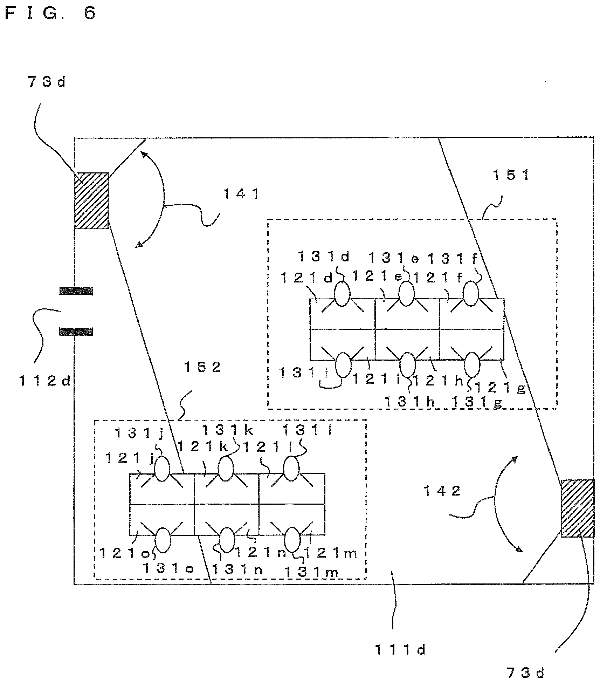

Fig. 6 is a diagram illustrating an example of the configuration of a room in the case where the habitable room space 22d is viewed from above in Embodiment 1 of the present invention.

The room 111d is provided with the remote controller 73d on a part of a wall side thereof. Another part of a wall side of the room 111d is provided with the same remote controller 73d.

In the room 111d, a desk group 151 is formed by desks 121d to 121i, which are adjacently arranged. At the desks 121d to 121i, persons 131d to 131i are seated respectively.

Further, in the room 111d, a desk group 152 is formed by desks 121j to 121o, which are adjacently arranged. At the desks 121j to 121o, persons 131j to 131o are seated respectively.

When the desks 121j to 121o are not particularly distinguished from one another, they are each called a desk 121.

When the persons 131j to 131o are not particularly distinguished from one another, they are each called a person 131.

The remote controller 73d is provided with the human detection sensor 401, which will be described in detail later.

One human detection sensor 401 has a function for the detection range 141. The other human detection sensor 401 has a function for a detection range 142. That is, the human detection sensors 401 detect a person within the detection range 141 and the detection range 142.

In short, since the detection range of the human detection sensor 401 is determined in advance, installation of the human detection sensor 401 may be decided as needed.

For example, as illustrated in Fig. 5, when it is assumed that a small number of persons 131a to 131c are present in the room 111a, one remote controller 73a installed in the room 111a will suffice to detect the people's motion and entry and exit from the room.

Meanwhile, for example, as illustrated in Fig. 6, when it is assumed that a relatively large number of persons 131d to 131o in several groups separately from each other, are present in the room 111d, plural remote controllers 73d, for example, two remote controllers 73d, installed in the room 111d will suffice to detect the people's motion and entry and exit from the room.

Therefore, if the remote controller 73 is configured to include the human detection sensor 401, the person detection range can be expanded or reduced as necessary.

That is, with the use of the remote controller 73 configured to include the human detection sensor 401, by providing a necessary number of remote controllers 73 at positions which cover detection ranges, a necessary number of human detection sensors 401, as sensors for confirming the presence or absence of a person, may be arranged at appropriate positions.

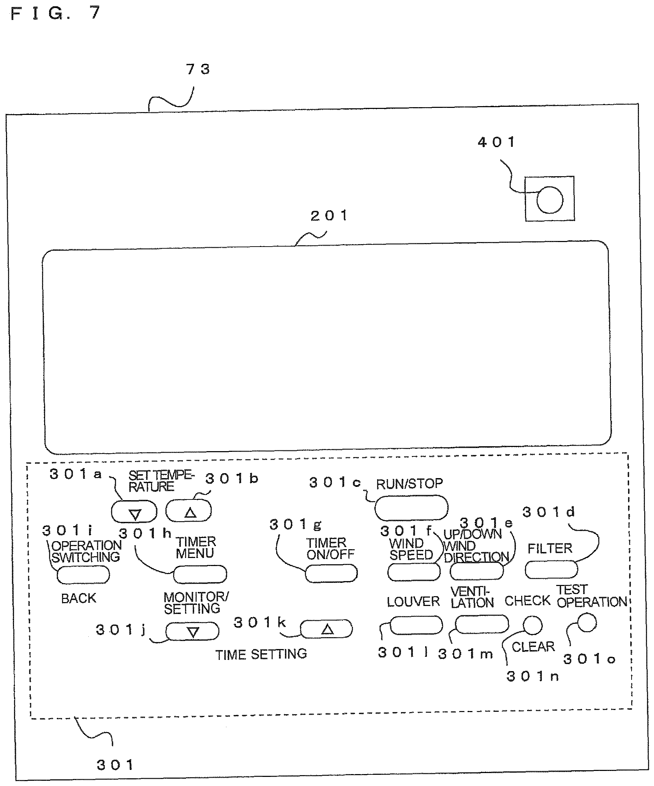

Fig. 7 is a diagram illustrating an example of the external configuration of the remote controller 73 in Embodiment 1 of the present invention.

As illustrated in Fig. 7, the remote controller 73 is made from a synthetic resin or the like and is molded into a substantially quadrangular-form housing. The remote controller 73 includes the display unit 201, an operation unit 301, and the human detection sensor 401.

Illustration as to the thickness of the remote controller 73 is omitted.

The display unit 201 includes, for example, a liquid crystal display or the like, and displays the setting contents, operating state, a schedule, and the like of the air-conditioning apparatus.

Although the display unit 201 may include a liquid crystal display, the display unit 201 may include a different display device.

The operation unit 301 includes, for example, various operation buttons, and is an interface for receiving such instructions as changing the setting contents of the air-conditioning apparatus, changing the operating state by starting an operation of the air-conditioning apparatus, changing the operating state by stopping the operation of the air-conditioning apparatus, and changing the scheduled operation contents.

The operation unit 301 generates a predetermined code based on a received instruction, and thereby generates an operation signal or a schedule operation signal.

The operation unit 301 supplies the generated operation signal, schedule operation signal, and the like to a processor 601, which will be described later.

Specifically, the operation unit 301 includes a set temperature decrease button 301a, a set temperature increase button 301b, a run/stop button 301c, a filter button 301d, an up/down wind direction button 301e, a wind speed button 301f, a timer ON/OFF button 301g, a timer menu button 301h, an operation switching button 301i, a time setting decrease button 301j, a time setting increase button 301k, a louver button 301l, a ventilation button 301m, a check button 301n, and a test operation button 301o.

In Fig. 7, each of the various operation buttons is illustrated in a substantially quadrangular form. However, the form of each of the various operation buttons is not particularly limited to this.

Specifically, a different function may be allocated to any of the set temperature decrease button 301a, the set temperature increase button 301b, the run/stop button 301c, the filter button 301d, the up/down wind direction button 301e, the wind speed button 301f, the timer ON/OFF button 301g, the timer menu button 301h, the operation switching button 301i, the time setting decrease button 301j, the time setting increase button 301k, the louver button 301l, the ventilation button 301m, the check button 301n, and the test operation button 301o.

For example, when the run/stop button 301c and the timer ON/OFF button 301g are held down at the same time, a schedule setting menu may be displayed on the display unit 201.

Further, for example, when the run/stop button 301c and the check button 301n are held down at the same time, a human detection sensor setting menu may be displayed on the display unit 201.

In any case, when a screen is shifted to the schedule setting menu or the human detection sensor setting menu, by allocating a different function to any of the set temperature decrease button 301a, the set temperature increase button 301b, the run/stop button 301c, the filter button 301d, the up/down wind direction button 301e, the wind speed button 301f, the timer ON/OFF button 301g, the timer menu button 301h, the operation switching button 301i, the time setting decrease button 301j, the time setting increase button 301k, the louver button 301l, the ventilation button 301m, the check button 301n, and the test operation button 301o, the setting is able to be performed.

Any one or some of the "set temperature decrease button 301a", the "set temperature increase button 301b", the "run/stop button 301c", the "filter button 301d", the "up/down wind direction button 301e", the "wind speed button 301f", the "timer ON/OFF button 301g", the "timer menu button 301h", the "operation switching button 301i", the "time setting decrease button 301j", the "time setting increase button 301k", the "louver button 301l", the "ventilation button 301m", the "check button 301n", and the "test operation button 301o" corresponds to a "schedule-related operation part" of the present invention.

Furthermore, any one or some of the "set temperature decrease button 301a", the "set temperature increase button 301b", the "run/stop button 301c", the "filter button 301d", the "up/down wind direction button 301e", the "wind speed button 301f", the "timer ON/OFF button 301g", the "timer menu button 301h", the "operation switching button 301i", the "time setting decrease button 301j", the "time setting increase button 301k", the "louver button 301l", the "ventilation button 301m", the "check button 301n", and the "test operation button 301o" corresponds to a "sensor-related operation part" of the present invention.

When these buttons are depressed, operation signals are generated.

Further, when the schedule-related operation parts are operated, schedule operation signals are generated.

Furthermore, when the sensor-related operation parts are operated, sensor operation signals are generated.

Although an example in which the operation unit 301 includes buttons is described above, the operation unit 301 is not particularly limited to this. For example, the operation unit 301 may include a touch panel.

In short, the operation unit 301 has a function of an input interface and an embodiment of the operation unit 301 is not particularly limited.

As described in detail later, when a sensor-related button is depressed, setting for enabling the operation of the human detection sensor 401 or setting for disabling the operation of the human detection sensor 401 is performed.

When a button regarding setting for enabling the operation is depressed, the operation unit 301 determines that operation enable information is input, and transmits a setting instruction for enabling the operation of the human detection sensor 401 to the processor 601.

Further, when a button regarding setting for disabling the operation is depressed, the operation unit 301 determines that operation disable information is input, and supplies a setting instruction for disabling the operation of the human detection sensor 401 to the processor 601.

The human detection sensor 401 detects infrared light emitted from an object, which is a monitoring target located in a monitoring region. That is, the human detection sensor 401 is a radiant energy measuring sensor which detects the presence or absence of an object by measuring radiant energy emitted from the object.

For example, when the temperature converted from radiant energy is equal to or higher than a preset threshold, the human detection sensor 401 generates a presence/absence detection signal indicating the presence of an object serving as a monitoring target, and supplies the presence/absence detection signal to the processor 601, which will be described later.

Further, for example, when the temperature converted from radiant energy is lower than the preset threshold, the human detection sensor 401 generates a presence/absence detection signal indicating the absence of an object serving as a monitoring target, and supplies the presence/absence detection signal to the processor 601, which will be described later.

Specifically, the human detection sensor 401 includes a pyroelectric sensor, a circuit board which performs A/D conversion of infrared light acquired at the pyroelectric sensor to obtain an electric signal, and the like. The circuit board performs conversion into temperature, where necessary.

In the pyroelectric sensor, piezoelectric ceramic absorbs infrared light emitted from an object serving as a monitoring target. By absorbing infrared light, a change in the temperature of the piezoelectric ceramic occurs, and the change in the temperature causes an electric charge.

As described above, the pyroelectric sensor is a sensor which detects the motion of an object serving as a monitoring target, such as, for example, a person, by utilizing piezoelectric ceramic having physical characteristics of pyroelectric effects in which an electric charge occurs due to a change in temperature.

The human detection sensor 401 may include a sensor different from a pyroelectric sensor. For example, the human detection sensor 401 may include an infrared sensor, a heat insulation part which insulates the infrared sensor from surrounding heat, a circuit board which performs A/D conversion of infrared light acquired at the infrared sensor to obtain an electric signal, and the like.

The infrared sensor is configured such that, for example, sixty-four thermopiles are independently driven.

The heat insulation part represents a heat insulator. The heat insulation part is formed such that, for example, a foamed heat insulator surrounds the infrared sensor.

The circuit board converts heat energy of infrared light detected by the thermopiles into an electric signal, and performs conversion into temperature, where necessary.

Instead of the human detection sensor 401, imaging means, such as a CCD image sensor, may detect the motion of a person.

In this case, for example, with the use of a motion capture function and the like provided in a circuit board which controls the CCD image sensor, displacement of the motion of a person may be calculated, and the motion of the person may be determined based on a calculation result.

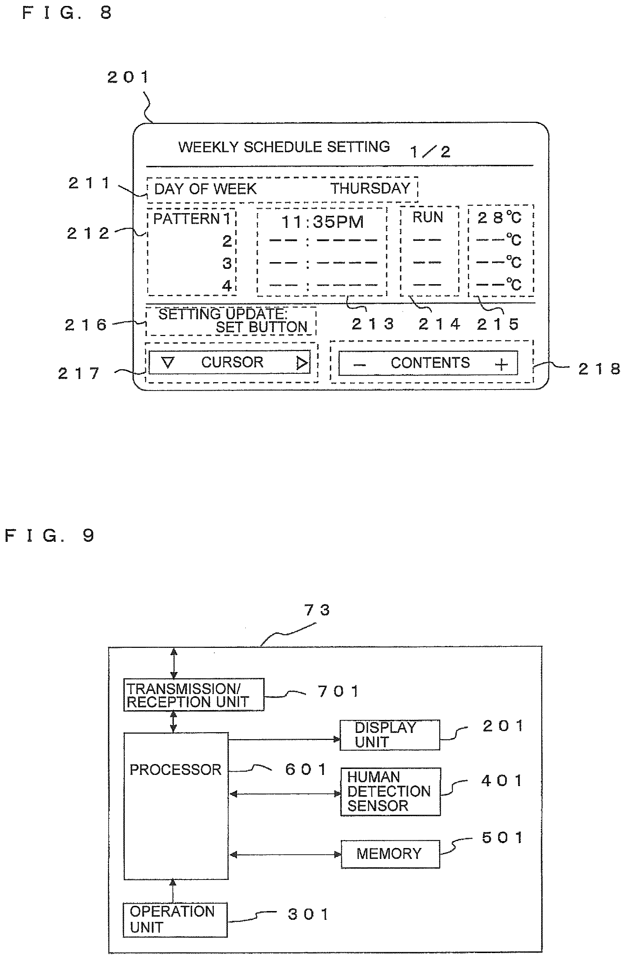

Fig. 8 is a diagram illustrating an example of a schedule setting screen displayed on the display unit 201 in Embodiment 1 of the present invention.

As illustrated in Fig. 8, a schedule setting menu is displayed on the display unit 201. As a screen title, for example, "weekly schedule setting" is displayed.

The display unit 201 includes various display regions. Contents corresponding to the various display regions are displayed on the display unit 201. When input corresponding to a display region is performed, an input result is reflected in the display region.

For example, an input result of a day of the week for which schedule setting is performed is displayed in a day of the week operation region 211.

Further, for example, results of allocation of patterns 1 to 4 to input schedules are displayed in a pattern operation region 212.

Further, for example, a result of input of a schedule start time is displayed in a time operation region 213.

Furthermore, for example, a result of input as to whether the operating state of a schedule is a running state or a stopped state is displayed in a run/stop operation region 214.

Furthermore, for example, a set temperature is displayed in a set temperature operation region 215.

Further, for example, information for prompting depression of a final determination button as to whether or not setting update is to be determined is displayed in a setting update button notification region 216.

Furthermore, for example, information for prompting a cursor operation is displayed in a cursor operation region 217.

Furthermore, for example, information for prompting selection of an operation item is displayed in a contents operation region 218.

In the example of Fig. 8, a result of input of a schedule as a pattern 1 in which the day of the week is every Thursday, the schedule start time is 11:35 pm, the operating state at the schedule start time is the running state, and the set temperature at the schedule start time is 28 degrees Centigrade, is displayed.

That is, a result of inputting a plan in which an air-conditioning operation at the set temperature of 28 degrees Centigrade is performed at 11:35 pm every Thursday, is displayed.

The display example explained above is merely an example and the display is not particularly limited to this.

Fig. 9 is a diagram illustrating an example of the internal configuration of the remote controller 73 in Embodiment 1 of the present invention.

As illustrated in Fig. 9, the remote controller 73 includes the display unit 201, the operation unit 301, a memory 501, the processor 601, a transmission/reception unit 701, and the human detection sensor 401.

The display unit 201 displays data stored in the memory 501, which will be described later, and a processing result of the processor 601, which will be described later.

When various operation buttons are depressed, the operation unit 301 generates codes corresponding to the various operation buttons, and inputs the generated codes to the processor 601 which performs internal control of the remote controller 73.

The memory 501 temporarily stores data using, for example, a rewritable RAM (Random Access Memory). The memory 501 also stores a processing program, a parameter, codes corresponds to the various operation buttons, and the like, using, for example, a read-only ROM (Read Only Memory). That is, the memory 501 includes a RAM, a ROM, and the like.

The processor 601 reads a processing program or the like from the memory 501, and executes the program or the like based on a frequency of an oscillator, which is not illustrated, for supplying certain clocks. Further, when the operation unit 301 is operated by a user, the processor 601 supplies to the transmission/reception unit 701 a code for controlling the air-conditioning apparatus and supplies to the display unit 201 an operation result of the operation unit 301, in accordance with the operation.

When an instruction for changing the setting of the human detection sensor 401 is given via the operation unit 301, the processor 601 changes the setting of the human detection sensor 401 by transmitting the instruction to the human detection sensor 401.

The transmission/reception unit 701 performs modulation processing on a supplied code so that the code may be transmitted, and transmits the modulated transmission signal to the load-side unit 42.

The transmission/reception unit 701 performs demodulation processing on a reception signal received from the load-side unit 42, and supplies the demodulated demodulation signal to the processor 601.

As described above, the human detection sensor 401 confirms the presence or absence of a person, and supplies a presence/absence detection signal to the processor 601.

The "processor 601" corresponds to a "controller" in the present invention.

The remote controller 73 and the load-side unit 42 may be communicated with each other via a communication medium in a wired or wireless manner.

For example, the remote controller 73 and the load-side unit 42 may be connected by wire.

Furthermore, for example, the remote controller 73 and the load-side unit 42 may be wirelessly connected, and an ad-hoc network may thus be formed.

Furthermore, for example, the remote controller 73 may be a wireless remote controller which operates the air-conditioning apparatus using an infrared signal. In this case, a signal of the transmission/reception unit 701 may be supplied to an LED in a light-emitting unit, which is not illustrated, and a predetermined signal may be transmitted from the LED to the load-side unit 42.

In any case, the remote controller 73 and the load-side unit 42 are only capable of communicating with each other.

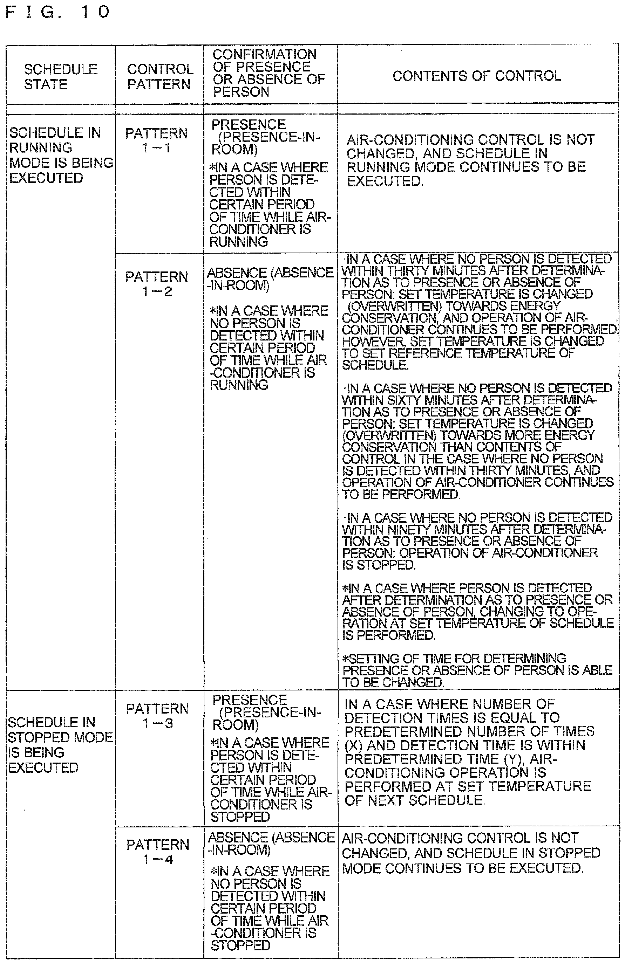

Fig. 10 is a diagram illustrating an example of control information in the case where a schedule stored in the memory 501 is being executed in Embodiment 1 of the present invention.

When the schedule state is a state in which a schedule in a running mode is being executed, the control pattern is a pattern 1-1 or a pattern 1-2.

In the case of the pattern 1-1, a presence (presence-in-room) state is allocated for confirmation of the presence or absence of a person. This state corresponds to a case where a person is detected within a certain period of time while the air-conditioning apparatus is running.

In Fig. 10, the air-conditioning apparatus is described as an air-conditioner.

In the case of the pattern 1-1, when a person is detected as a result of confirmation of the presence or absence of a person, the contents of control are set such that air-conditioning control is not changed and the schedule in the running mode continues to be executed.

In the case of the pattern 1-2, an absence (absence-in-room) state is allocated for confirmation of the presence or absence of a person. This state corresponds to a case where no person is detected within a certain period of time while the air-conditioning apparatus is running.

In the case of the pattern 1-2, when no person is detected as a result of confirmation of the presence or absence of a person, any of three cases described below is set as the contents of control.

First, in the case where no person is detected within thirty minutes after the determination as to the presence or absence of a person, the set temperature is changed (overwritten) towards energy conservation, and the operation of the air-conditioning apparatus continues to be performed. However, setting for changing the set temperature to a set reference temperature of the schedule is performed.

Second, in the case where no person is detected within sixty minutes after the determination as to the presence or absence of a person, setting is performed such that the set temperature is changed (overwritten) towards more energy conservation than the contents of control in the case where no person is detected within thirty minutes, and the operation of the air-conditioning apparatus continues to be performed.

Third, in the case where a person is detected after the determination as to the presence or absence of a person, changing to the operation at the set temperature of the schedule is performed.

In the case where a person is detected after the determination as to the presence or absence of a person, changing to the operation at the set temperature of the schedule is performed. Further, setting of a time for determining the presence or absence of a person is able to be changed.

When the schedule state is a state in which a schedule in a stopped mode is being executed, the control pattern is a pattern 1-3 or a pattern 1-4.

In the case of the pattern 1-3, a presence (presence-in-room) state is allocated for the confirmation of the presence or absence of a person. This state corresponds to a case where a person is detected within a certain period of time while the air-conditioning apparatus is stopped.

In the case of the pattern 1-3, when a person is detected as a result of the confirmation of the presence or absence of a person, in the case where the number of detection times is equal to a predetermined number of times (X) and the detection time is within a predetermined time (Y), setting for performing the air-conditioning operation at a set temperature of the next schedule, is performed.

In the case of the pattern 1-4, an absence (absence-in-room) state is allocated for the confirmation of the presence or absence of a person. This state corresponds to a case where no person is detected within a certain period of time while the air-conditioning apparatus is stopped.

In the case of the pattern 1-4, when no person is detected as a result of the confirmation of the presence or absence of a person, setting is performed such that the air-conditioning control is not changed and the schedule in the stopped mode continues to be performed.

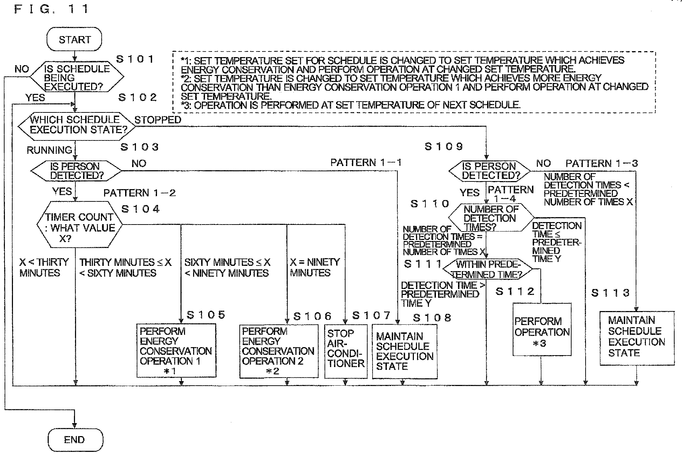

Fig. 11 is a flowchart for explaining a control example of the heat-source-side control section 71 during execution of a schedule in Embodiment 1 of the present invention.

### (Step S101)

The heat-source-side control section 71 determines whether or not a schedule is being executed.

When a schedule is being executed, the heat-source-side control section 71 proceeds to step S102. In contrast, when a schedule is not being executed, the heat-source-side control section 71 ends processing.

### (Step S102)

The heat-source-side control section 71 determines whether the schedule execution state is a running state or a stopped state.

When the schedule execution state is the running state, the heat-source-side control section 71 proceeds to step S103. In contrast, when the schedule execution state is the stopped state, the heat-source-side control section 71 proceeds to step S109.

### (Step S103)

The heat-source-side control section 71 determines whether or not a person is detected.

When a person is detected, the heat-source-side control section 71 proceeds to step S104. In contrast, when no person is detected, the heat-source-side control section 71 proceeds to step S108.

Processing for proceeding to step S108 corresponds to the pattern 1-1 explained above.

### (Step S104)

The heat-source-side control section 71 determines which one of the followings the value of a timer count X is.

When the value of the timer count X is less than thirty minutes, the heat-source-side control section 71 returns to step S102.

When the value of the time count X is thirty minutes or more and less than sixty minutes, the heat-source-side control section 71 proceeds to step S105.

When the value of the timer count X is sixty minutes or more and less than ninety minutes, the heat-source-side control section 71 proceeds to step S106.

When the value of the timer count X is ninety minutes, the heat-source-side control section 71 proceeds to step S107.

### (Step S105)

The heat-source-side control section 71 performs an energy conservation operation 1, and returns to step S102. Specifically, the heat-source-side control section 71 changes the set temperature set for the schedule to a set temperature which achieves energy conservation, and performs an operation at the changed set temperature. Then, the heat-source-side control section 71 returns to step S102.

### (Step S106)

The heat-source-side control section 71 performs an energy conservation operation 2, and returns to step S102. Specifically, the heat-source-side control section 71 performs changing to a set temperature which achieves more energy conservation than the energy conservation operation 1, and performs an operation at the changed set temperature. Then, the heat-source-side control section 71 returns to step S102.

### (Step S107)

The heat-source-side control section 71 stops the air-conditioner, and returns to step S102.

### (Step S108)

The heat-source-side control section 71 maintains the schedule execution state, and returns to step S102.

Processing of steps S104 to S107 corresponds to the pattern 1-2 explained above.

### (Step S109)

The heat-source-side control section 71 determines whether or not a person is detected.

When a person is detected, the heat-source-side control section 71 proceeds to step S110. In contrast, when no person is detected, the heat-source-side control section 71 proceeds to step S113.

Processing for proceeding to step S110 corresponds to the pattern 1-4 explained above.

Further, processing for proceeding to step S113 corresponds to the pattern 1-3 explained above.

### (Step S110)

The heat-source-side control section 71 determines whether or not the number of detection times is equal to a predetermined number of times.

When the number of detection times is equal to the predetermined number of times X, the heat-source-side control section 71 proceeds to step S111. In contrast, when the number of detection times is smaller than the predetermined number of times X, the heat-source-side control section 71 returns to step S102.

### (Step S111)

The heat-source-side control section 71 determines whether or not a detection time is within a predetermined time.

When the detection time is longer than the predetermined time Y, the heat-source-side control section 71 returns to step S102. In contrast, when the detection time is shorter than or equal to the predetermined time Y, the heat-source-side control section 71 proceeds to step S112.

### (Step S112)

The heat-source-side control section 71 performs an operation. Specifically, the heat-source-side control section 71 performs an operation at the set temperature of the next schedule, and returns to step S102.

### (Step S113)

The heat-source-side control section 71 maintains the schedule execution state, and returns to step S102.

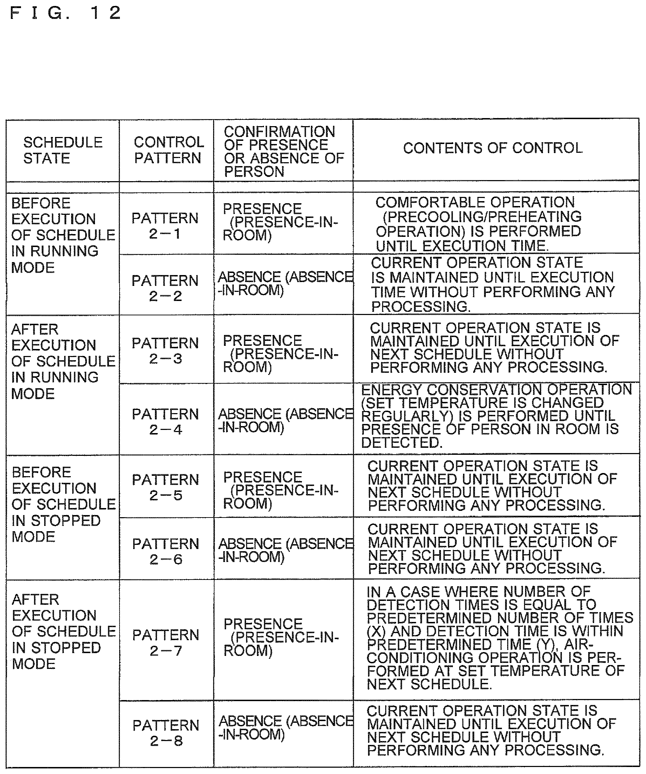

Fig. 12 is a diagram illustrating an example of control information before and after execution of a schedule stored in the memory 501 in Embodiment 1 of the present invention.

In the case where the schedule state is a state before execution of a schedule in the running mode, the control pattern is a pattern 2-1 or a pattern 2-2.

In the case of the pattern 2-1, a presence (presence-in-room) state is allocated for the confirmation of the presence or absence of a person, and the contents of control at this time are set such that a comfortable operation (precooling/preheating operation) is performed until an execution time.

In the case of the pattern 2-2, an absence (absence-in-room) state is allocated for the confirmation of the presence or absence of a person, and the contents of control at this time are set such that the current operation state is maintained until the execution time without performing any processing.

In the case where the schedule state is a state after execution of a schedule in the running mode, the control pattern is a pattern 2-3 or a pattern 2-4.

In the case of the pattern 2-3, a presence (presence-in-room) state is allocated for the confirmation of the presence or absence of a person, and the contents of control at this time are set such that the current operation state is maintained until execution of the next schedule without performing any processing.

In the case of the pattern 2-4, an absence (absence-in-room) state is allocated for the confirmation of the presence or absence of a person, and the contents of control at this time are set such that an energy conservation operation (the set temperature is regularly changed) is performed until detection of the presence of a person in the room.

In the case where the schedule state is a state before execution of a schedule in the stopped mode, the control pattern is a pattern 2-5 or a pattern 2-6.

In the case of the pattern 2-5, a presence (presence-in-room) state is allocated for the confirmation of the presence or absence of a person, and the contents of control at this time are set such that the current operation state is maintained until execution of the next schedule without performing any processing.

In the case of the pattern 2-6, an absence (absence-in-room) state is allocated for the confirmation of the presence or absence of a person, and the contents of control at this time are set such that the current operation state is maintained until execution of the next schedule without performing any processing.

In the case where the schedule state is a state after execution of a schedule in the stopped mode, the control pattern is a pattern 2-7 or a pattern 2-8.

In the case of the pattern 2-7, a presence (presence-in-room) state is allocated for the confirmation of the presence or absence of a person, and the contents of control at this time are set such that when the number of detection times is equal to the predetermined number of times (X) and the detection time is within the predetermined time (Y), an air-conditioning operation is set to be performed at the set temperature of the next schedule.

In the case of the pattern 2-8, an absence (absence-in-room) state is allocated for the confirmation of the presence or absence of a person, and the contents of control are set such that the current operation state is maintained until execution of the next schedule without performing any processing.

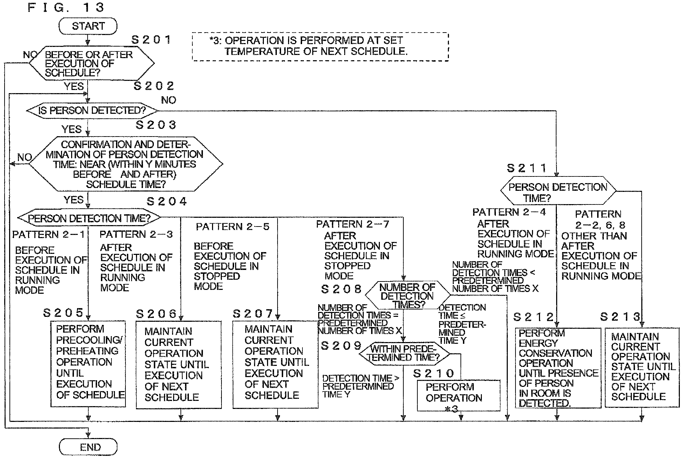

Fig. 13 is a flowchart for explaining a control example of the heat-source-side control section 71 before and after execution of a schedule in Embodiment 1 of the present invention.

### (Step S201)

The heat-source-side control section 71 determines whether the current state is a state before or after execution of a schedule or not.

When the current state is the state before or after a schedule, the heat-source-side control section 71 proceeds to step S202. In contrast, when the current state is not the state before or after execution of a schedule, the heat-source-side control section 71 ends processing.

### (Step S202)

The heat-source-side control section 71 determines whether or not a person is detected.

When a person is detected, the heat-source-side control section 71 proceeds to step S203. In contrast, when no person is detected, the heat-source-side control section 71 proceeds to step S211.

### (Step S203)

As a confirmation and determination of a person detection time, the heat-source-side control section 71 determines whether or not the person detection time is near a schedule time (within Y minutes before and after the schedule time).

When the person detection time is near the schedule time, the heat-source-side control section 71 proceeds to step S204. In contrast, when the person detection time is not near the schedule time, the heat-source-side control section 71 returns to step S202.

### (Step S204)

The heat-source-side control section 71 determines the person detection time.

When the person detection time is before execution of a schedule in the running mode, the heat-source-side control section 71 proceeds to step S205.

Processing for proceeding to step S205 corresponds to the pattern 2-1 explained above.

When the person detection time is after the execution of a schedule in the running mode, the heat-source-side control section 71 proceeds to step S206.

Processing for proceeding to step S206 corresponds to the pattern 2-3 explained above.

When the person detection time is before execution of a schedule in the stopped mode, the heat-source-side control section 71 proceeds to step S207.

Processing for proceeding to step S207 corresponds to the pattern 2-5 explained above.

When the person detection time is after the execution of a schedule in the stopped mode, the heat-source-side control section 71 proceeds to step S208.

Processing for proceeding to step S208 corresponds to the pattern 2-7 explained above.

### (Step S205)

The heat-source-side control section 71 performs a precooling/preheating operation until the execution of the schedule, and returns to step S202.

### (Step S206)

The heat-source-side control section 71 maintains the current operation state until execution of the next schedule, and returns to step S202.

### (Step S207)

The heat-source-side control section 71 maintains the current operation state until execution of the next schedule, and returns to step S202.

### (Step S208)

The heat-source-side control section 71 determines whether or not the number of detection times is equal to a predetermined number of times.

When the number of detection times is equal to the predetermined number of times X, the heat-source-side control section 71 proceeds to step S209. In contrast, when the number of detection times is smaller than the predetermined number of times X, the heat-source-side control section 71 returns to step S202.

### (Step S209)

The heat-source-side control section 71 determines whether or not the detection time is within a predetermined time.

When the detection time is longer than the predetermined time Y, the heat-source-side control section 71 returns to step S202. In contrast, when the detection time is shorter than or equal to the predetermined time Y, the heat-source-side control section 71 proceeds to step S210.

### (Step S210)

The heat-source-side control section 71 performs an operation and returns to step S202. Specifically, the heat-source-side control section 71 performs an operation at the set temperature of the next schedule, and returns to step S202.

### (Step S211)

The heat-source-side control section 71 determines the person detection time.

When the person detection time is after the execution of a schedule in the running mode, the heat-source-side control section 71 proceeds to step S212.

Processing for proceeding to step S212 corresponds to the pattern 2-4 explained above.

When the person detection time is not after the execution of a schedule in the running mode, the heat-source-side control section 71 proceeds to step S213.

Processing for proceeding to step S213 corresponds to the patterns 2-2, 2-6, and 2-8 explained above.

### (Step S212)

The heat-source-side control section 71 performs an energy conservation operation until detection of the presence of a person in the room, and returns to step S202.

### (Step S213)

The heat-source-side control section 71 maintains the current operation state until the execution of the next schedule, and returns to step S202.

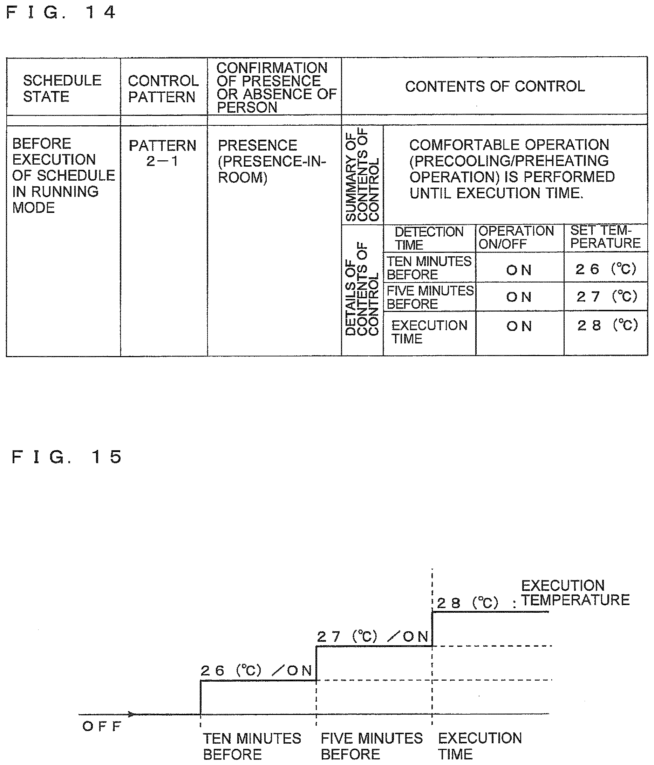

Fig. 14 is a diagram illustrating an example of control information in the case where a person is detected before execution of a schedule in the running mode stored in the memory 501 in Embodiment 1 of the present invention.

As illustrated in Fig. 14, the details of processing in the case of the pattern 2-1 are set.

Here, a heating operation is to be performed. It is assumed that a preheating operation is performed before a heating operation starts at a schedule start time.

When the detection time is ten minutes before the schedule start time, the operating state is operation ON and the set temperature at this time is 26 degrees Centigrade.

When the detection time is five minutes before the schedule start time, the operating state is operation ON and the set temperature at this time is 27 degrees Centigrade.

When the detection time is equal to the execution time, the operating state is operation ON and the set temperature at this time is 28 degrees Centigrade.

Fig. 15 is a diagram for explaining in a chronological order a control example of the heat-source-side control section 71 in the case where a person is detected before execution of a schedule in the running mode in Embodiment 1 of the present invention.

As illustrated in Fig. 15, the set temperature is increased in a stepwise manner with time.

The case of the heating operation is explained above. In the case of a cooling operation, precooling is performed.

Therefore, the set temperature can be reduced in a stepwise manner, which is contrary to the heating operation.

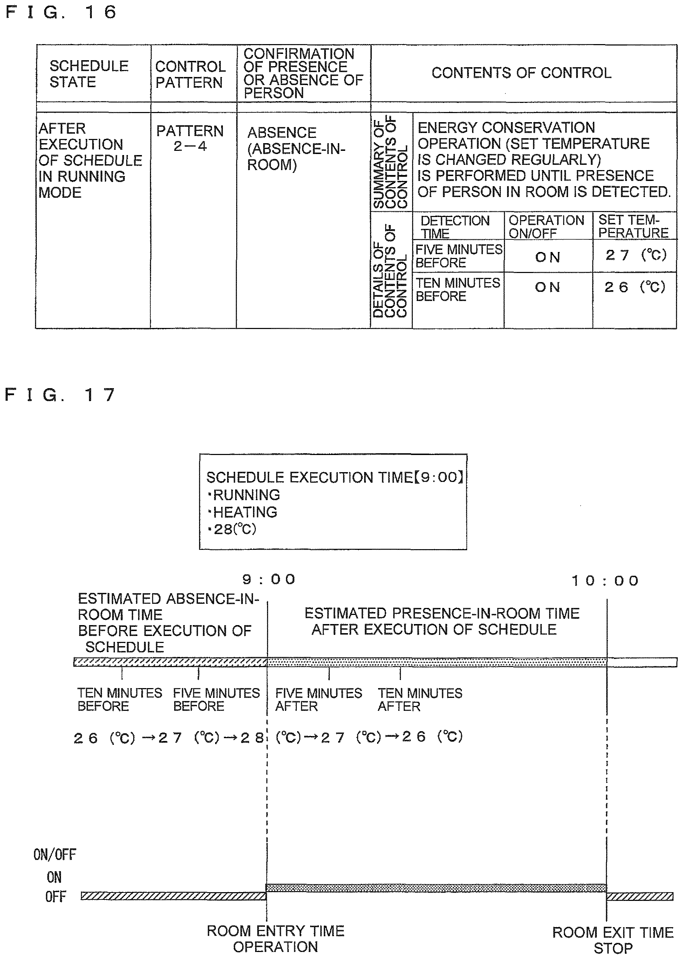

Fig. 16 is a diagram illustrating an example of control information in the case where no person is detected after execution of a schedule in the running mode stored in the memory 501 in Embodiment 1 of the present invention.

As illustrated in Fig. 16, the details of processing in the case of the pattern 2-4 are set.

When the detection time is five minutes after the schedule execution time, the operating state is operation ON and the set temperature at this time is 27 degrees Centigrade.

When the detection time is ten minutes after the schedule execution time, the operating state is operation ON and the set temperature at this time is 26 degrees Centigrade.

That is, if no person is present in the room at the detection time, processing for reducing the set temperature in a stepwise manner with time, is performed.

Fig. 17 is a diagram for explaining in a chronological order a control example of the heat-source-side control section 71 in the case where no person is detected after execution of a schedule in the running mode in Embodiment 1 of the present invention.

Here, it is assumed that a schedule is set such that the schedule execution time is nine and a heating operation at the set temperature of 28 degrees Centigrade is performed at nine.

As illustrated in Fig. 17, before execution of the schedule, the preheating operation explained in Figs. 14 and 15 is performed, and after the execution of the schedule, the energy conservation operation explained in Fig. 16 is performed.

The case of the heating operation is explained above. In the case of the cooling operation, if no person is present in the room at the detection time, processing for increasing the set temperature in a stepwise manner with time, may be performed, which is contrary to the heating operation.

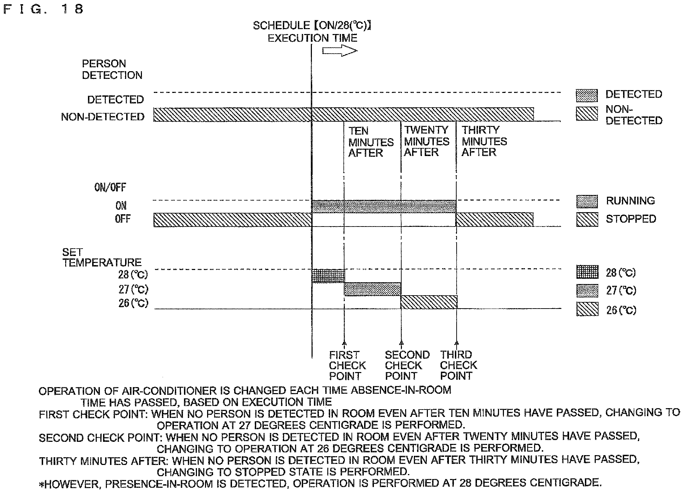

Fig. 18 is a diagram for explaining in a chronological order the details of a control example of the heat-source-side control section 71 in the case where no person is detected after execution of a schedule in the running mode in Embodiment 1 of the present invention.

In this example, it is assumed that the setting temperature is 28 degrees Centigrade.

In this case, the operation of the air-conditioner is changed each time an absence time has passed, based on the execution time.

For example, a first check point is the case where no person is present in the room even after ten minutes have passed. In this case, the set temperature is changed to 27 degrees Centigrade.

Further, for example, a second check point is the case where no person is present in the room even after twenty minutes have passed. In this case, the set temperature is changed to 26 degrees Centigrade.

Further, for example, a third check point is the case where no person is present in the room even after thirty minutes have passed. In this case, the operation of the air-conditioner is stopped.

When presence-in-room is detected, an operation is performed at the set temperature of 28 degrees Centigrade.

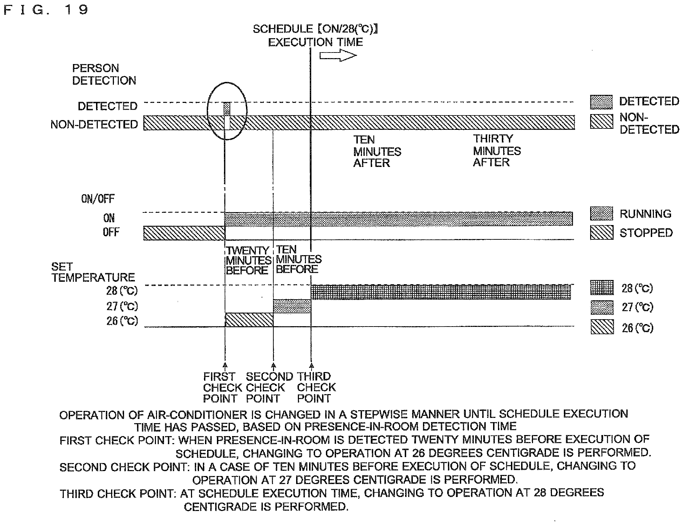

Fig. 19 is a diagram for explaining in a chronological order the details of a control example of the heat-source-side control section 71 in the case where a person is detected before execution of a schedule in the running mode in Embodiment 1 of the present invention.

Here, it is assumed that the set temperature is 28 degrees Centigrade.

In this case, the operation of the air-conditioner is changed in a stepwise manner until the schedule execution time has passed, based on a presence-in-room detection time.

For example, a first check point is the case where presence-in-room is detected twenty minutes before execution of the schedule. In this case, the set temperature is changed to 26 degrees Centigrade.

Further, for example, a second check point is the case of ten minutes before the execution of the schedule. In this case, the set temperature is changed to 27 degrees Centigrade.

Further, for example, a third check point is the time of execution of the schedule. In this case, the set temperature is changed to 28 degrees Centigrade.

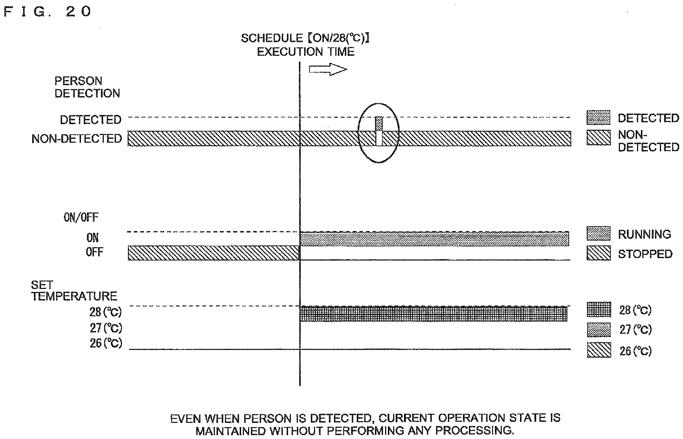

Fig. 20 is a diagram for explaining in a chronological order the details of a control example of the heat-source-side control section 71 in the case where a person is detected after execution of a schedule in the running mode in Embodiment 1 of the present invention.

In this example, it is assumed that the set temperature is 28 degrees Centigrade.

In this case, even when a person is detected, the current operation state is maintained without performing any processing.

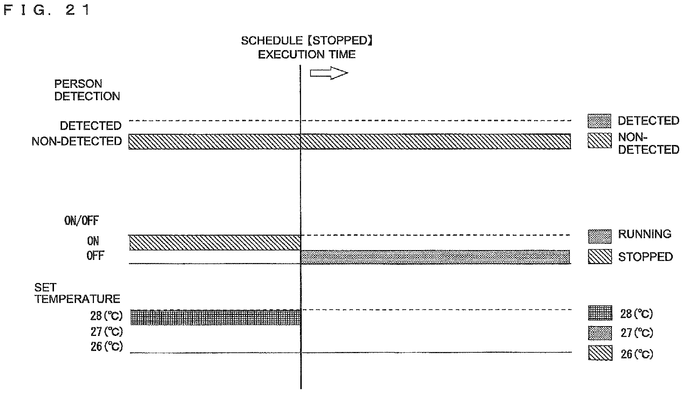

Fig. 21 is a diagram for explaining in a chronological order the details of a control example of the heat-source-side control section 71 in the case where no person is detected before execution of a schedule in the stopped mode in Embodiment 1 of the present invention.

In this case, since no person is detected, the stopped state is maintained without performing any processing.

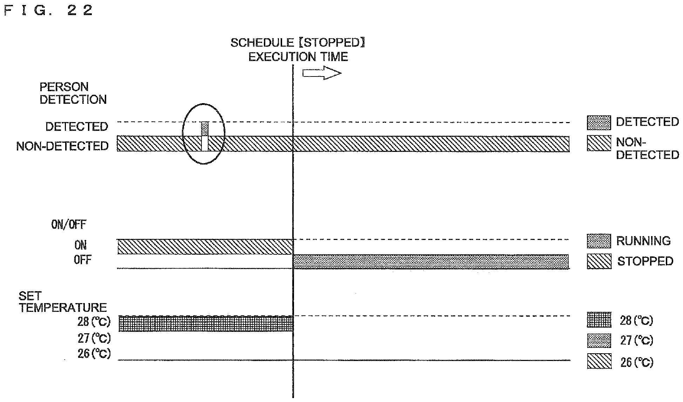

Fig. 22 is a diagram for explaining in a chronological order the details of a control example of the heat-source-side control section 71 in the case where a person is detected before execution of a schedule in the stopped mode in Embodiment 1 of the present invention.

In this case, since presence-in-room is detected before the execution of the schedule in the stopped mode and presence-in-room is not detected after the execution of the schedule in the stopped mode, the schedule is being executed without performing any processing.

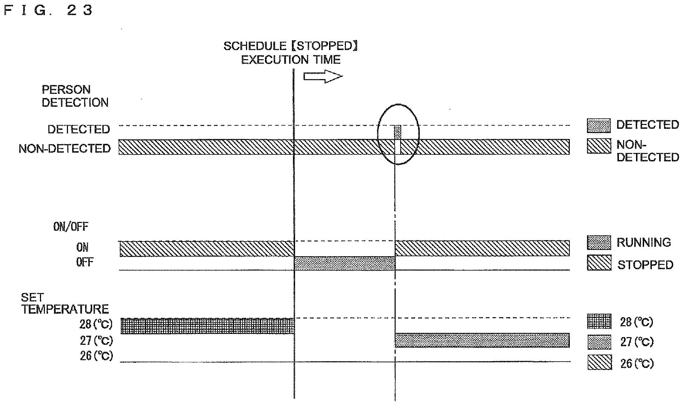

Fig. 23 is a diagram for explaining in a chronological order the details of a control example of the heat-source-side control section 71 in the case where a person is detected after execution of a schedule in the stopped mode in Embodiment 1 of the present invention.

In this case, since presence-in-room is detected after the execution of the schedule in the stopped mode, the stopped mode is canceled at the time when presence-in-room is detected, and the operating state of the air-conditioner is changed to the running state.

As described above, by providing a sensor for detecting the presence or absence of a person on the remote controller 73, a necessary number of sensors for confirming the presence or absence of a person may be arranged at appropriate positions, and an air-conditioned comfortable space may be provided while reducing energy consumption.

As described above, in Embodiment 1, the remote controller 73 and the air-conditioning apparatus that is controlled in accordance with an instruction from the remote controller 73 are provided. The remote controller 73 includes the operation unit 301 that generates an operation signal for operating the air-conditioning apparatus, the human detection sensor 401 that detects the presence or absence of a person, the transmission/reception unit 701 that transmits an operation signal to the air-conditioning apparatus and receives a signal from the air-conditioning apparatus, and the processor 601 that controls the human detection sensor 401 and the transmission/reception unit 701. The operation unit 301 includes a plurality of schedule-related operation parts that generate a schedule operation signal related to a schedule. The human detection sensor 401 detects the presence or absence of a person, and generates a presence/absence detection signal representing a result of detection of the presence or absence of a person. The processor 601 transmits a schedule operation signal to the air-conditioning apparatus, and transmits a presence/absence detection signal to the air-conditioning apparatus. The air-conditioning apparatus includes the heat-source-side control section 71 that controls the operation of the air-conditioning apparatus on the basis of the schedule operation signal and the presence/absence detection signal. Accordingly, a necessary number of sensors for confirming the presence or absence of a person may be arranged at appropriate positions, and an air-conditioned comfortable space may be provided while reducing energy consumption.

### Embodiment 2.

In Embodiment 2, processing for correcting a schedule by learning a behavior pattern of a person will be explained on the assumption of the configuration explained in Embodiment 1.

In Embodiment 2, items not particularly mentioned are similar to those in Embodiment 1, and the same functions and configuration features as those in Embodiment 1 will be described using the same signs as those in Embodiment 1.

Further, explanation of the same functions and configuration features as those in Embodiment 1 will be omitted.

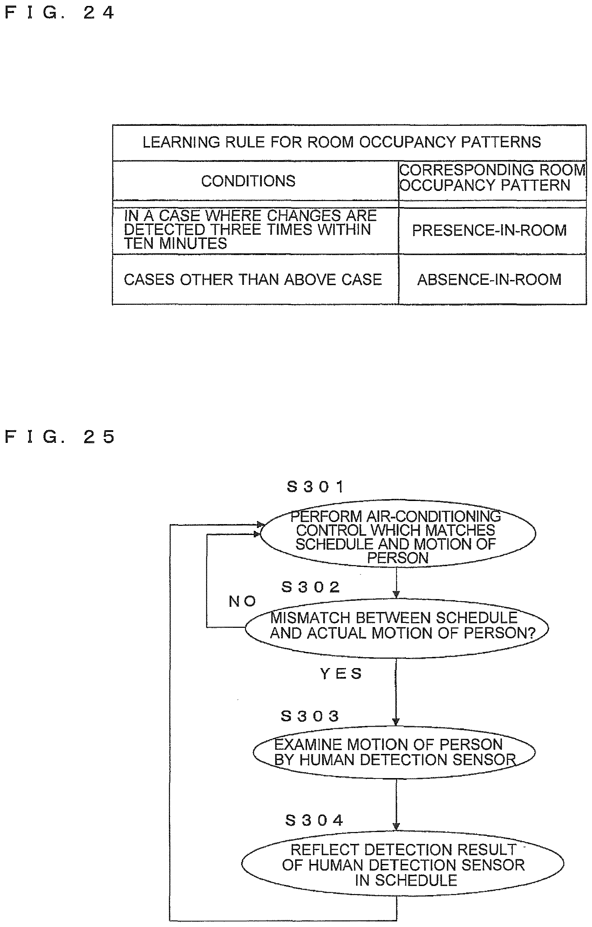

Fig. 24 is a diagram illustrating an example of a learning rule for room occupancy patterns stored in the memory 501 in Embodiment 2 of the present invention.

As illustrated in Fig. 24, as a learning rule for room occupancy patterns, two patterns are set.

First, as a condition, in the case where a change is detected three times within ten minutes, the corresponding pattern is defined as presence-in-room.

Second, as a condition, in cases other than the case where a change is detected three times within ten minutes, the corresponding pattern is defined as absence-in-room.

Based on such a learning rule for room occupancy patterns, the remote controller 73 corrects a schedule.

Specifically, the processor 601 stores a presence/absence detection signal acquired from the human detection sensor 401 and a schedule operation signal acquired from the operation unit 301 into the memory 501.

The processor 601 supplies schedule operation signals to the memory 501 every time setting information including a schedule start time, a setting temperature of the air-conditioning apparatus, and a running state or a stopped state, which is an operating state of the air-conditioning apparatus, is updated.

The processor 601 continues to supply presence/absence detection signals to the memory 501 for a predetermined period of time.

The processor 601 corrects the schedule start time, based on the presence/absence detection signals and the schedule operation signals stored in the memory 501.

The processor 601 updates the schedule operation signal, based on the corrected schedule start time, and transmits the update result to the air-conditioning apparatus via the transmission/reception unit 701.

Fig. 25 is a state transition diagram for explaining an example of control of the processor 601 based on the learning rule for room occupancy patterns in Embodiment 2 of the present invention.

### (Step S301)

The heat-source-side control section 71 performs air-conditioning control which matches a schedule and the motion of a person, based on various instructions supplied from the remote controller 73, and then proceeds to step S302.

### (Step S302)

The heat-source-side control section 71 determines whether or not the schedule matches the actual motion of a person.

When the schedule matches the actual motion of a person, the heat-source-side control section 71 returns to step S301. In contrast, when the schedule does not match the actual motion of a person, the heat-source-side control section 71 proceeds to step S303.

In such a determination, for example, in a case where no person is always present in the room during an operation in accordance with a schedule, the heat-source-side control section 71 determines that the schedule does not match the actual motion of a person.

That is, when energy conservation is not achieved or comfort is not achieved, the heat-source-side control section 71 determines that the schedule does not match the actual motion of a person.

### (Step S303)

The heat-source-side control section 71 issues an instruction to the remote controller 73, examines the motion of a person by the human detection sensor 401 mounted on the remote controller 73, and then proceeds to step S304.

For example, the heat-source-side control section 71 causes the remote controller 73 to perform examination for each specific day of the week, and stores an examination result of the day as data in the memory 501.

The heat-source-side control section 71 causes the remote controller 73 to count the number of detection times for each time zone of the day, based on the examination result of the day stored in the memory 501.

### (Step S304)

The heat-source-side control section 71 reflects the detection result of the human detection sensor 401 in the schedule.

For example, the heat-source-side control section 71 resets the schedule start time or the like to the time which more matches the motion of a person.

Accordingly, the heat-source-side control section 71 is able to control the air-conditioning apparatus with more energy conservation and more comfort.

As described above, in Embodiment 2, the memory 501 which stores a presence/absence detection signal and a schedule operation signal is provided, and the processor 601 supplies the schedule operation signal to the memory 501 every time setting information is updated, supplies a presence/absence detection signal to the memory 501 for a predetermined period of time, corrects a schedule start time, based on the presence/absence detection signal stored in the memory 501 and the schedule operation signal stored in the memory 501, and transmits the schedule operation signal updated based on the corrected schedule start time to the air-conditioning apparatus from the transmission/reception unit 701. Therefore, the air-conditioning apparatus may be controlled with more energy conservation and more comfort.

### Embodiment 3.

In Embodiment 3, processing for determining whether or not a person is present in the room 111 will be explained by way of a specific example, on the assumption of the configurations explained in Embodiments 1 and 2.

In Embodiment 3, items not particularly mentioned are similar to those in Embodiments 1 and 2, and the same functions and configuration features as those in Embodiments 1 and 2 will be described using the same signs as those in Embodiments 1 and 2.

Further, explanation of the same functions and configuration features as those in Embodiments 1 and 2 will be omitted.

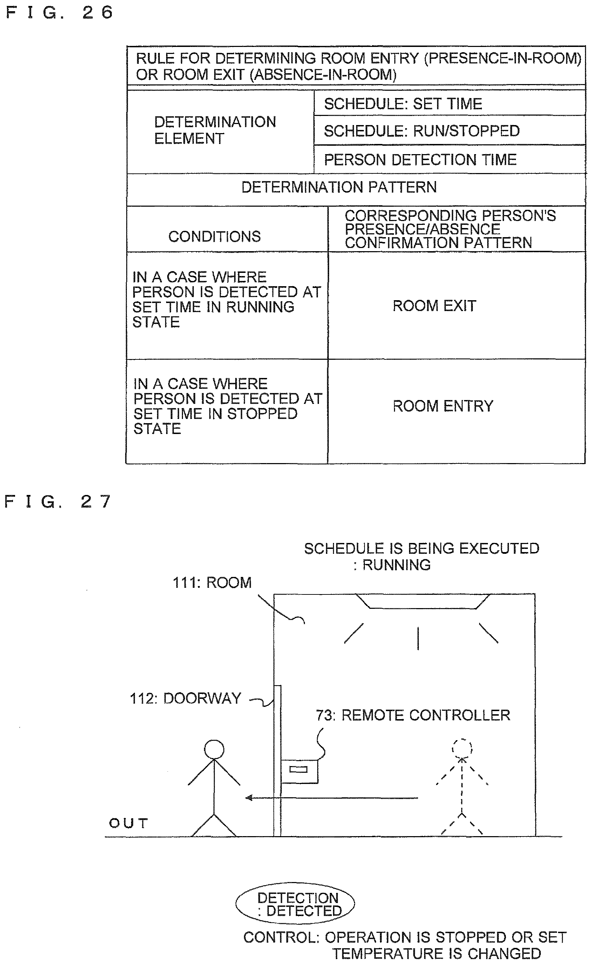

Fig. 26 is a diagram illustrating an example of person's presence/absence confirmation patterns stored in the memory 501 using the human detection sensor 401 in Embodiment 3 of the present invention.

As illustrated in Fig. 26, a room access determination rule using the human detection sensor 401 is set.

That is, a rule for determining room entry or room exit, namely, a rule for determining presence-in-room or absence-in-room, is set as described below.

Three determination elements are set as described below.

First, as an item regarding a schedule, a set time within a predetermined range is set.

Second, as an item regarding a schedule, a running state of the air-conditioning system 11 or a stopped state of the air-conditioning system 11 is set.

Third, a person detection time is set.

As determination patterns using the determination elements mentioned above, two patterns are set as described below.

First, as a condition, in the case where a person is detected at the set time within the predetermined range while the air-conditioning system 11 is running, the corresponding person's presence/absence confirmation pattern is defined as room exit.

Second, as a condition, in the case where a person is detected at the set time within the predetermined range while the air-conditioning system 11 is stopped, the corresponding person's presence/absence confirmation pattern is defined as room entry.

Cases where the above-described rule is employed will be explained with reference to Figs. 27 to 32.

Fig. 27 is a diagram for explaining a state where a person exits from the room 111 during execution of a schedule in the running mode in Embodiment 3 of the present invention.

As illustrated in Fig. 27, it is assumed that the remote controller 73 is installed near the doorway 112 of the room 111, a schedule for the air-conditioning system 11 is being executed in the room 111, and the air-conditioning system 11 is running.

At this time, a person exits from the room 111 through the doorway 112.

When the person passes through the doorway 112, the remote controller 73 detects the person by using the human detection sensor 401, which is not illustrated.

Based on the state in which a person is detected, room exit is obtained as a result.

Thus, performing an operation in accordance with the schedule for the room 111 where no person is present, does not match the actual activities of a person. Therefore, control is performed such that the air-conditioning system 11 is stopped or the set temperature of the air-conditioning system 11 is changed to a value at which power consumption decreases so that energy conservation can be achieved.

For example, the air-conditioning system 11 performs control to reduce the set temperature during a heating operation and to increase the set temperature during a cooling operation.

A plurality of human detection sensors 401 may be provided on the remote controller 73 in a row in parallel to the ground.

With this arrangement, in the case where a human detection sensor 401 provided at a position slightly distant from the doorway 112 detects a person and a human detection sensor 401 provided at a position near the doorway 112 then detects the person, movement of the person toward the outside of the room 111 can be detected.

In this case, room exit can be obtained as a determination result.

That is, based on the state in which a person is detected, room exit is obtained as a result.

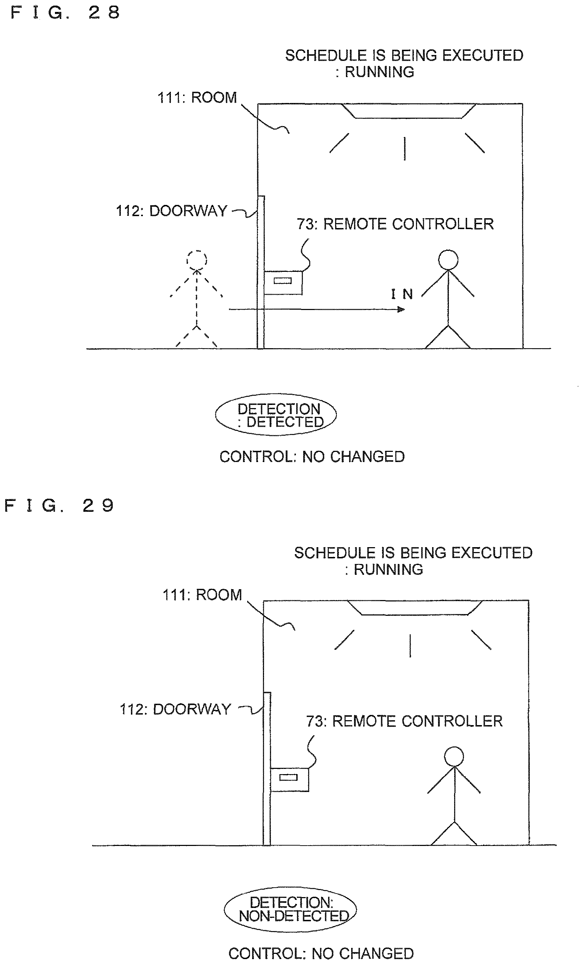

Fig. 28 is a diagram for explaining a state where a person enters the room 111 during execution of a schedule in the running mode in Embodiment 3 of the present invention.

As illustrated in Fig. 28, it is assumed that the remote controller 73 is installed near the doorway 112 of the room 111, a schedule for the air-conditioning system 11 is being executed in the room 111, and the air-conditioning system 11 is running.

At this time, a person enters the room 111 through the doorway 112.

When the person passes through the doorway 112, the remote controller 73 detects the person by using the human detection sensor 401, which is not illustrated.

For example, if the rule is applied as it is mentioned above to this case, room exit is obtained as a determination result.

Now, a plurality of human detection sensors 401 are provided on the remote controller 73 in a row in parallel to the ground.

With this arrangement, in the case where a human detection sensor 401 provided at a position near the doorway 112 detects a person and a human detection sensor 401 provided at a position slightly distant from the doorway 112 then detects the person, movement of the person toward the inside of the room 111 can be detected.

In this case, room entry can be obtained as a determination result.

That is, based on the state in which a person is detected, room entry is obtained as a result.

Thus, performing an operation in accordance with the schedule for the room 111 where a person is present, matches the actual activities of a person. Therefore, control is performed such that the air-conditioning system 11 continues to be operated while maintaining the status quo, and no change of control is made.

Fig. 29 is a diagram for explaining a state where a person is present in the room 111 during execution of a schedule in the running mode in Embodiment 3 of the present invention.

As illustrated in Fig. 29, it is assumed that the remote controller 73 is installed near the doorway 112 of the room 111, a schedule for the air-conditioning system 11 is being executed in the room 111, and the air-conditioning system 11 is running.

At this time, a person is present in the room 111.

That is, since the person is present in the room 111 and does not pass by the remote controller 73, the human detection sensor 401 does not detect the person.

As a result, even in the state in which no person is detected, the person has already entered the room.

Thus, performing an operation in accordance with the schedule for the room 111 where a person is present, matches the actual activities of a person. Therefore, control is performed such that the air-conditioning system 11 continues to be operated while maintaining the status quo, and no change of control is made.

That is, when the human detection sensor 401 does not detect any person, an operation is performed according to the schedule.

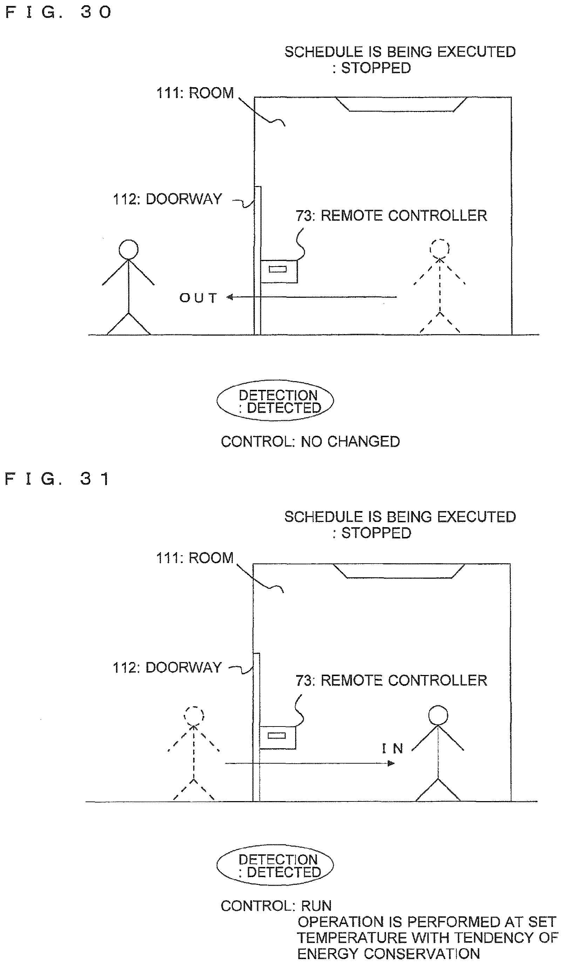

Fig. 30 is a diagram for explaining a state where a person exits from the room 111 during execution of a schedule in the stopped mode in Embodiment 3 of the present invention.

As illustrated in Fig. 30, it is assumed that the remote controller 73 is installed near the doorway 112 of the room 111, a schedule for the air-conditioning system 11 is being executed in the room 111, and the air-conditioning system 11 is stopped.

At this time, a person exits from the room 111 through the doorway 112.

When the person passes through the doorway 112, the remote controller 73 detects the person by using the human detection sensor 401, which is not illustrated.

For example, if the rule is applied as it is mentioned above to this case, room entry is obtained as a determination result.

Now, a plurality of human detection sensors 401 are provided on the remote controller 73 in a row in parallel to the ground.

With this arrangement, in the case where a human detection sensor 401 provided at a position slightly distant from the doorway 112 detects a person and a human detection sensor 401 provided at a position near the doorway 112 then detects the person, movement of the person toward the outside of the room 111 can be detected.

In this case, room exit can be obtained as a determination result.

That is, based on the state in which a person is detected, room exit is obtained as a result.

Thus, stopping an operation in accordance with the schedule for the room 111 where no person is present, matches the actual activities of a person. Therefore, control is performed such that the air-conditioning system 11 continues to be stopped while maintaining the status quo, and no change of control is made.

Fig. 31 is a diagram for explaining a state where a person enters the room 111 during execution of a schedule in the stopped mode in Embodiment 3 of the present invention.

As illustrated in Fig. 31, it is assumed that the remote controller 73 is installed near the doorway 112 of the room 111, a schedule for the air-conditioning system 11 is being executed in the room 111, and the air-conditioning system 11 is stopped.

At this time, a person enters the room 111 through the doorway 112.

When the person passes through the doorway 112, the remote controller 73 detects the person by using the human detection sensor 401, which is not illustrated.

Based on the state in which a person is detected, room entry is obtained as a result.

Thus, stopping an operation in accordance with the schedule for the room 111 where a person is present, does not match the actual activities of a person. Therefore, control is performed such that the air-conditioning system 11 is operated in the running state and the air-conditioning system 11 is operated at a set temperature with a tendency of energy conservation so that energy conservation can be achieved.

A plurality of human detection sensors 401 may be provided on the remote controller 73 in a row in parallel to the ground.

With this arrangement, in the case where a human detection sensor 401 provided at a position near the doorway 112 detects a person and a human detection sensor 401 provided at a position slightly distant from the doorway 112 then detects the person, movement of the person toward the inside of the room 111 can be detected.

In this case, room entry can be obtained as a determination result.

That is, based on the state in which a person is detected, room entry is obtained as a result.

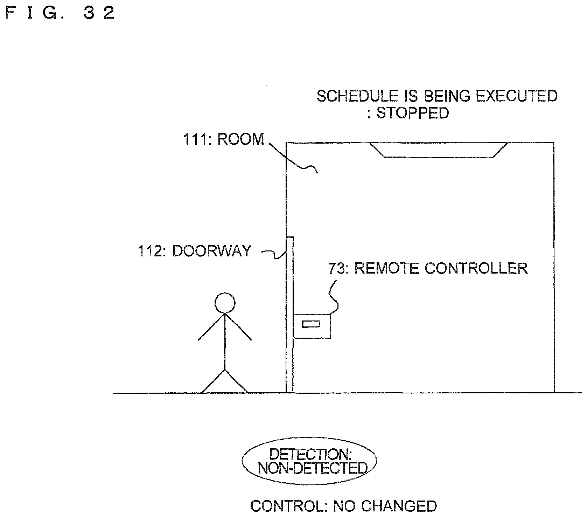

Fig. 32 is a diagram for explaining a state where no person is present in the room 111 during execution of a schedule in the stopped mode in Embodiment 3 of the present invention.

As illustrated in Fig. 32, it is assumed that the remote controller 73 is installed near the doorway 112 of the room 111, a schedule for the air-conditioning system 11 is being executed in the room 111, and the air-conditioning system 11 is stopped.

At this time, a person is located at a position near the doorway 112 and outside the room 111.

Since no person passes through the doorway 112, the remote controller 73 detects no person even using the human detection sensor 401, which is not illustrated.

As a result, no person is detected.

Thus, stopping an operation in accordance with the schedule for the room 111 where a person is present, matches the actual activities of a person, control is performed such that the air-conditioning system 11 continues to be stopped while maintaining the status quo, and no change of control is made.

As described above, by controlling the air-conditioning system 11 using the remote controller 73 on which the human detection sensor 401 is provided, a necessary number of sensors for confirming the presence or absence of a person may be arranged at appropriate positions, and an air-conditioned comfortable space may be provided while reducing energy consumption.

As described above, in Embodiment 3, the remote controller 73 and the air-conditioning apparatus that is controlled in accordance with an instruction from the remote controller 73 are provided. The remote controller 73 includes the operation unit 301 that generates an operation signal for operating the air-conditioning apparatus, the human detection sensor 401 that detects the presence or absence of a person, the transmission/reception unit 701 that transmits an operation signal to the air-conditioning apparatus and receives a signal from the air-conditioning apparatus, and the processor 601 that controls the human detection sensor 401 and the transmission/reception unit 701. The operation unit 301 includes a plurality of schedule-related operation parts that generate a schedule operation signal related to a schedule. The human detection sensor 401 detects the presence or absence of a person, and generates a presence/absence detection signal representing a result of detection of the presence or absence of a person. The processor 601 transmits a schedule operation signal to the air-conditioning apparatus, and transmits a presence/absence detection signal to the air-conditioning apparatus. The air-conditioning apparatus includes the heat-source-side control section 71 that controls the operation of the air-conditioning apparatus on the basis of the schedule operation signal and the presence/absence detection signal. Accordingly, a necessary number of sensors for confirming the presence or absence of a person may be arranged at appropriate positions, and an air-conditioned comfortable space may be provided while reducing energy consumption.

### Embodiment 4.

Embodiment 4 differs from Embodiments 1 to 3 in that a presence/absence detection signal is generated by an illuminance sensor 801, instead of being generated by the human detection sensor 401.

Confirmation of presence or absence using the illuminance sensor 801, which will be explained below, may be singularly performed by the illuminance sensor 801 or may be performed by the illuminance sensor 801 and the human detection sensor 401 used in Embodiments 1 to 3. In the case where the confirmation of presence or absence is performed by the illuminance sensor 801 and the human detection sensor 401, the confirmation is executed based on both a detection result of the human detection sensor 401 and a detection result of the illuminance sensor 801. Therefore, more accurate confirmation of presence or absence may be achieved.

In Embodiment 4, items not particularly mentioned are similar to those in Embodiments 1 to 3, and the same functions and configuration features as those in Embodiments 1 to 3 will be described using the same signs as those in Embodiments 1 to 3.

Further, explanation of the same functions and configuration features as those in Embodiments 1 to 3 will be omitted.

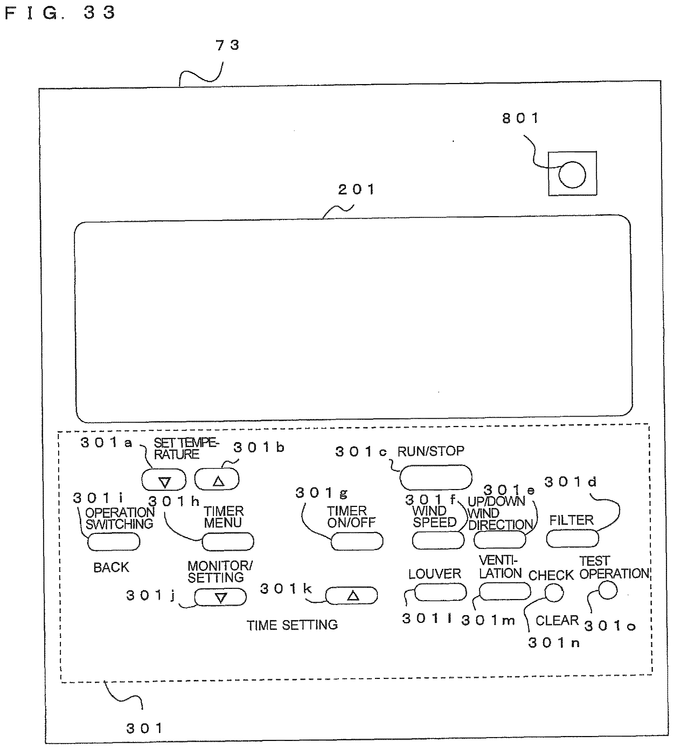

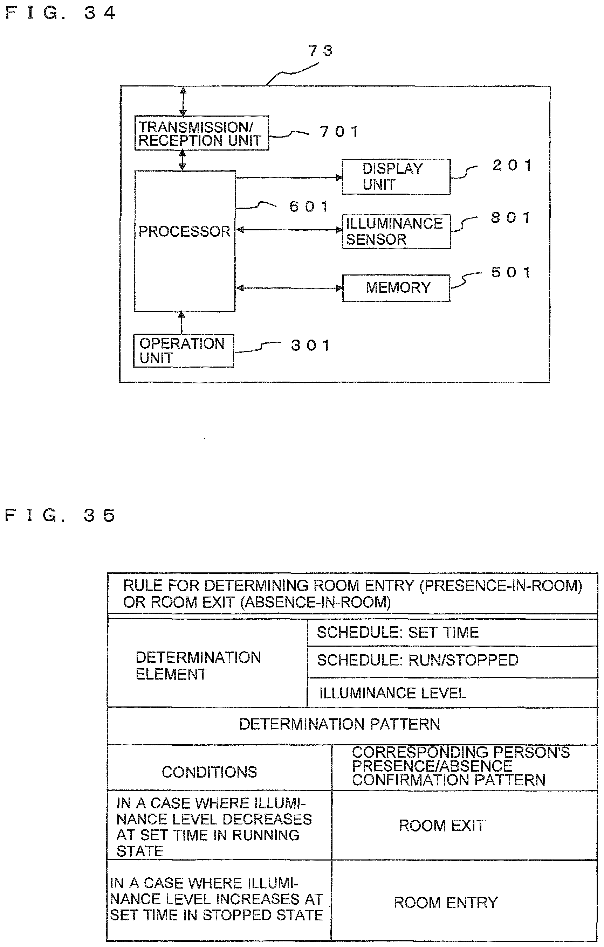

Fig. 33 is a diagram illustrating an example of the external configuration of the remote controller 73 in Embodiment 4 of the present invention. Fig. 34 is a diagram illustrating an example of the internal configuration of the remote controller 73 in Embodiment 4 of the present invention. Fig. 35 is a diagram illustrating an example of person's presence/absence confirmation patterns stored in the memory 501 using the illuminance sensor 801 in Embodiment 4 of the present invention.

The illuminance sensor 801 measures the intensity of radiant energy by measuring radiant energy radiated from an object, for example, illumination. The illuminance sensor 801 is made of, for example, a photodiode.

A photodiode is a sensor which converts light energy into a current or voltage and which detects a change in the intensity of light.

That is, the illuminance sensor 801 includes a conversion circuit which converts light energy detected by the photodiode into a current value or a voltage value. The illuminance sensor 801 determines whether or not the illuminance level reaches a certain value by comparing the current value or voltage value obtained by conversion at the conversion circuit with a preset threshold.

As illustrated in Fig. 33, the illuminance sensor 801 is provided, for example, on the upper right corner of the remote controller 73.

Although an example in which the illuminance sensor 801 is provided on the upper right corner of the remote controller 73 is explained here, the position of the illuminance sensor 801 is not particularly limited to this.

For example, the illuminance sensor 801 may be provided at the lower center of the remote controller 73.

As illustrated in Fig. 34, the illuminance sensor 801 is formed so as to be able to communicate with the processor 601.

That is, a detection result supplied from the illuminance sensor 801 is supplied to the processor 601, and a predetermined control signal is supplied from the processor 601 to the illuminance sensor 801.

As illustrated in Fig. 35, a room access determination rule using the illuminance sensor 801 is set.

That is, a rule for determining room entry or room exit, namely, a rule for determining presence-in-room or absence-in-room, is set as described below.

Three determination elements are set as described below.

First, as an item regarding a schedule, a set time within a predetermined range is set.

Second, as an item regarding a schedule, a running state of the air-conditioning system 11 or a stopped state of the air-conditioning system 11 is set.

Third, an illuminance level is set.

As determination patterns using the above-mentioned determination elements, two patterns are set as described below.

First, as a condition, in the case where the illuminance level decreases at the set time within the predetermined range while the air-conditioning system 11 is running, the corresponding person's presence/absence confirmation pattern is defined as room exit.

Second, as a condition, in the case where the illuminance level increases at the set time within the predetermined range while the air-conditioning system 11 is stopped, the corresponding person's presence/absence confirmation pattern is defined as room entry.

That is, when an illuminance converted based on a current value or a voltage value converted from light energy detected by the photodiode which is not illustrated, is equal to or greater than the preset threshold, the illuminance sensor 801 generates a presence/absence confirmation signal indicating the presence of a person.

In addition, when an illuminance converted based on a current value or a voltage value converted from light energy detected by the photodiode which is not illustrated, is smaller than the preset threshold, the illuminance sensor 801 generates a presence/absence confirmation signal indicating the absence of a person.

Thus, the illuminance sensor 801 performs confirmation of the presence or absence of a person.

As described above, in Embodiment 4, the illuminance sensor 801 generates a presence/absence detection signal indicating the presence of a person when an illuminance converted from radiant energy emitted from illumination is equal to or greater than the preset threshold, and generates a presence/absence detection signal indicating the absence of a person when an illuminance converted from radiant energy emitted from illumination is smaller than the threshold. Accordingly, a necessary number of sensors for confirming the presence or absence of a person may be arranged at appropriate positions, and an air-conditioned comfortable space may be provided while reducing energy consumption.

### Embodiment 5.

In Embodiment 5, a feature that an operation condition of the human detection sensor 401 is able to be set, will be explained.

Processing for setting an operation condition of the human detection sensor 401, which will be described below, is applicable to any of Embodiments 1 to 4 explained above.

In Embodiment 5, items not particularly mentioned are similar to those in Embodiments 1 to 4, and the same functions and configuration features as those in Embodiments 1 to 4 will be described using the same signs as those in Embodiments 1 to 4.

Further, explanation of the same functions and configuration features as those in Embodiments 1 to 4 will be omitted.

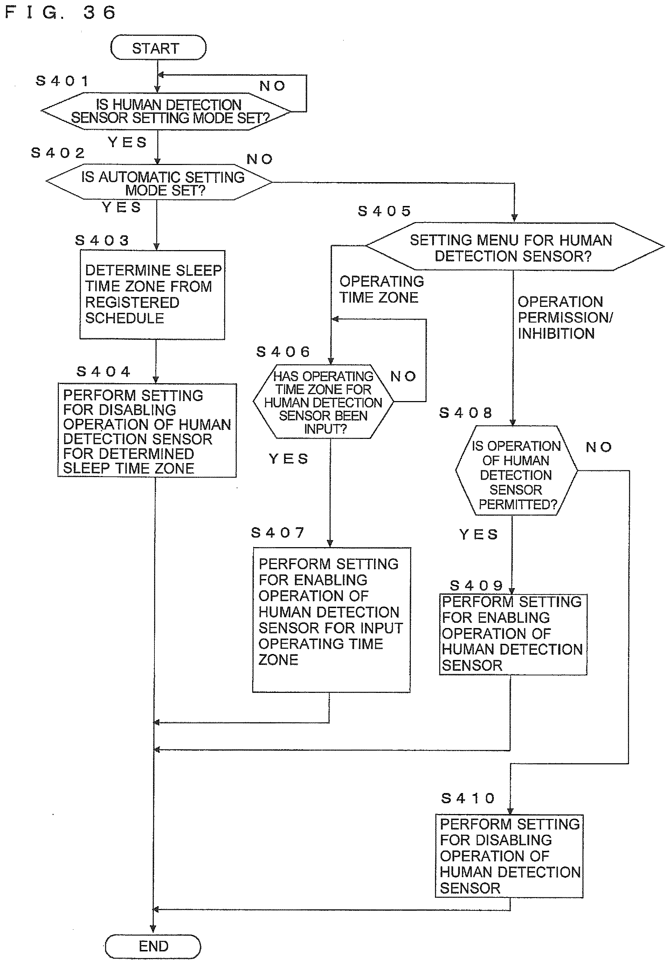

Fig. 36 is a flowchart for explaining an example of control of the processor 601 for the human detection sensor 401 in Embodiment 5 of the present invention.

### (Step S401)

The processor 601 determines whether or not a human detection sensor setting mode is set.

When the human detection sensor detection mode is set, the processor 601 proceeds to step S402. In contrast, when the human detection sensor setting mode is not set, the processor 601 returns to step S401.

### (Step S402)

The processor 601 determines whether or not an automatic setting mode is set.

When the automatic setting mode is set, the processor 601 proceeds to step S403. In contrast, when the automatic setting mode is not set, the processor 601 proceeds to step S405.

Here, the case where automatic setting mode is not set means a case where a manual setting mode is set.

### (Step S403)

The processor 601 determines a sleep time zone from a registered schedule.

For example, when the same temperature is set for a relatively long time in the midnight in the registered schedule, the processor 601 determines that the corresponding time zone is a sleep time zone.

Further, for example, when there is a time zone of a registered schedule that has a flag corresponding to a sleep time zone, the processor 601 determines that the corresponding time zone is a sleep time zone.

In the explanation provided above, an example of a method for determining a sleep time zone is described. However, the method for determining a sleep time zone is not particularly limited to this.

### (Step S404)

The processor 601 performs setting for disabling the operation of the human detection sensor 401 for the determined sleep time zone, and the processor 601 ends processing.

When setting for disabling the operation of the human detection sensor 401 is set, the human detection sensor 401 does not generate a presence/absence detection signal.

Accordingly, since a presence/absence detection signal is not transmitted from the remote controller 73 to the load-side control section 72, the heat-source-side control section 71 does not receive a presence/absence detection signal via the load-side control section 72.

Therefore, the heat-source-side control section 71 performs air-conditioning control without consideration of the human detection sensor 401.

In the explanation provided above, an example in which the human detection sensor 401 does not generate a presence/absence detection signal and no presence/absence detection signal is thus supplied to the heat-source-side control section 71, is described. However, control is not limited to this.

For example, by turning off the power to be supplied to the human detection sensor 401, the human detection sensor 401 itself may not be operated.

Furthermore, for example, by changing the state of a closed circuit formed between the human detection sensor 401 and the processor 601 into the state of an open circuit, a presence/absence detection signal generated by the human detection sensor 401 may not be supplied to the processor 601.

### (Step S405)

The processor 601 determines a setting menu of the human detection sensor 401.

When the setting menu of the human detection sensor 401 is for an operating time zone, the processor 601 proceeds to step S406. In contrast, when the setting menu of the human detection sensor 401 is for permission or inhibition of operation, the processor 601 proceeds to step S408.

### (Step S406)

The processor 601 determines whether or not the operating time zone for the human detection sensor 401 has been input.

When the operating time zone for the human detection sensor 401 has been input, the processor 601 proceeds to step S407. In contrast, when the operating time zone has not been input, the processor 601 returns to step S406.

That is, the setting menu is a menu for inputting the operating time zone, a standby state is maintained until the operating time zone has been input.

Although a description for the flowchart is omitted, when a predetermined standby time has passed, the processor 601 ends processing.

Further, an arbitrary button provided on the operation unit 301 receives input of the operating time zone. For example, by depressing the time setting decrease button 301j or the time setting increase button 301k, the operating time zone may be input. When a button, such as the time setting decrease button 301j or the time setting increase button 301k, is depressed and determination of the input operating time zone is confirmed by an arbitrary button provided on the operation unit 301, valid time zone information or invalid time zone information is formed, and a sensor operation signal based on the information is generated.

### (Step S407)

The processor 601 performs setting for enabling the operation of the human detection sensor 401 for the input operating time zone, and the processor 601 ends processing.

For example, the processor 601 sets an operation enable flag to 1, and receives a presence/absence detection signal supplied from the human detection sensor 401 when the operation enable flag is 1.

Further, for example, in the case where it is assumed that a signal transmission circuit formed between the processor 601 and the human detection sensor 401 includes an opening/closing unit, when setting for enabling the operation of the human detection sensor 401 is performed, control for setting the signal transmission circuit to a closed circuit may be performed in accordance with an instruction from the processor 601.

Further, for example, in the case where it is assumed that power to be supplied to the human detection sensor 401 is controlled by the processor 601, when setting for enabling the operation of the human detection sensor 401 is performed, power that exceeds an operable threshold voltage may be supplied to the human detection sensor 401 in accordance with an instruction from the processor 601.

### (Step S408)

The processor 601 determines whether or not the operation of the human detection sensor 401 is permitted.

When the operation of the human detection sensor 401 is permitted, the processor 601 proceeds to step S409. In contrast, when the operation of the human detection sensor 401 is not permitted, the processor 601 proceeds to step S410.

### (Step S409)

The processor 601 performs setting for enabling the operation of the human detection sensor 401, and the processor 601 ends processing.

For example, the processor 601 sets the operation enable flag to 1, and receives a presence/absence detection signal supplied from the human detection sensor 401 when the operation enable flag is 1.

Further, for example, in the case where it is assumed that the signal transmission circuit formed between the processor 601 and the human detection sensor 401 includes an opening/closing unit, when setting for enabling the operation of the human detection sensor 401 is performed, control for setting the signal transmission circuit to a closed circuit may be performed in accordance with an instruction from the processor 601.

Further, for example, in the case where it is assumed that power to be supplied to the human detection sensor 401 is controlled by the processor 601, when setting for enabling the operation of the human detection sensor 401 is performed, power that exceeds the operable threshold voltage may be supplied to the human detection sensor 401 in accordance with an instruction from the processor 601.

### (Step S410)

The processor 601 performs setting for disabling the operation of the human detection sensor 401, and the processor 601 ends processing.

For example, the processor 601 sets the operation disable flag to 1, and does not receive a presence/absence detection signal supplied from the human detection sensor 401 when the operation disable flag is 1.

Further, for example, in the case where it is assumed that the signal transmission circuit formed between the processor 601 and the human detection sensor 401 includes an opening/closing circuit, when setting for disabling the operation of the human detection sensor 401 is performed, control for setting the signal transmission circuit to an open circuit may be performed in accordance with an instruction from the processor 601.

Further, for example, in the case where it is assumed that power to be supplied to the human detection sensor 401 is controlled by the processor 601, when setting for disabling the operation of the human detection sensor 401 is performed, a bias voltage which is lower than the operable threshold voltage and prevents malfunction may be applied to the human detection sensor 401 in accordance with an instruction from the processor 601. Furthermore, no power may be supplied to the human detection sensor 401. In this case, a circuit for controlling fluctuations in the human detection sensor 401 may be separately provided.

In the explanation provided above, an example of the method for enabling or disabling the operation of the human detection sensor 401 is described. However, control is not limited to this.

As described above, with the remote controller 73, enable setting and disable setting for the human detection sensor 401 may be performed.

As described above, in Embodiment 5, the operation unit 301 includes a plurality of sensor-related operation parts that generate a sensor operation signal for operating the human detection sensor 401. When operation enable information for enabling the operation of the human detection sensor 401 is input via the sensor-related operation parts, the processor 601 performs setting for enabling the operation of the human detection sensor 401. When operation disable information for disabling the operation of the human detection sensor 401 is input via the sensor-related operation parts, the processor 601 performs setting for disabling the operation of the human detection sensor 401. When invalid time zone information, as an invalid time zone for which the operation of the human detection sensor 401 is disabled, is input via the sensor-related operation parts, the processor 601 performs the setting for disabling the operation of the human detection sensor 401 for the invalid time zone. When setting for disabling the operation of the human detection sensor 401 is set, the human detection sensor 401 does not generate a presence/absence detection signal. Accordingly, enable setting or disable setting for the human detection sensor 401 is able to be performed.

### Reference Signs List

1: building, 11: air-conditioning system, 12: refrigerant circuit, 21 and 21a to 21f: space, 22 and 22a to 22f: habitable room space, 23 and 23a to 23f: attic space, 31: refrigerant pipe, 41: heat-source-side unit, 42 and 42a to 42f: load-side unit, 51: compressor, 52: four-way valve, 53: heat-source-side heat exchanger, 54: accumulator, 55 and 55a to 55f: load-side heat exchanger, 56: first connection pipe, 57: second connection pipe, 58 and 58a to 58g: fan, 59 and 59a to 59f: first expansion device, 60: second expansion device, 61, 61a, and 61b: valve, 71: heat-source-side control section, 72 and 72a to 72f: load-side control section, 73 and 73a to 73f: remote controller, 81: discharge pressure sensor, 82: suction pressure sensor, 83 and 83a to 83g: air temperature sensor, 84: discharge temperature sensor, 85: suction temperature sensor, 86 and 86a to 86f: heat exchange temperature sensor, 87: liquid pipe pressure sensor, 91, 101, and 101a to 101f: measurement part, 92, 102, and 102a to 102f: calculation part, 93, 103, and 103a to 103f: driving part, 94, 104, and 104a to 104f: storage part, 95: input unit, 96: output unit, 105 and 105a to 105f: input/output unit, 111 and 111a to 111f: room, 112 and 112a to 112f: doorway, 121 and 121a to 121o: desk, 131 and 131a to 131ο: person, 141 and 142: detection range, 151 and 152: desk group, 201: display unit, 211: day of the week operation region, 212: pattern operation region, 213: time operation region, 214: run/stop operation region, 215: set temperature operation region, 216: setting update button notification region, 217: cursor operation region, 218: contents operation region, 301: operation unit, 301a: set temperature decrease button, 301b: set temperature increase button, 301c: run/stop button, 301d: filter button, 301e: up/down wind direction button, 301f: wind speed button, 301g: timer ON/OFF button, 301h, timer menu button, 301i: operation switching button, 301j: time setting decrease button, 301k: time setting increase button, 301l: louver button, 301m: ventilation button, 301n: check button, 301o: test operation button, 401: human detection sensor, 501: memory, 601: processor, 701: transmission/reception unit, 801: illuminance sensor

## Claims

1. An air-conditioning system comprising:
an air-conditioning remote controller (73); and
an air-conditioning apparatus controlled in accordance with an instruction from the air-conditioning remote controller (73),
wherein the air-conditioning remote controller includes
an operation unit (301) configured to generate an operation signal for operating the air-conditioning apparatus,
a radiant energy measuring sensor (401) configured to detect presence or absence of a person,
a transmission/reception unit (701) configured to transmit the operation signal to the air-conditioning apparatus and receive a signal from the air-conditioning apparatus, and
a controller (601) configured to control the radiant energy measuring sensor (401) and the transmission/reception unit (701),
wherein the operation unit (301) includes a plurality of schedule-related operation parts configured to generate a schedule operation signal related to a schedule,
wherein the radiant energy measuring sensor (401) is configured to detect the presence or absence of a person and to generate a presence/absence detection signal representing a result of detection of the presence or absence of a person,
wherein the controller (601) is configured to transmit the schedule operation signal to the air-conditioning apparatus and to transmit the presence/absence detection signal to the air-conditioning apparatus,
wherein the air-conditioning apparatus includes an air-conditioning control section configured to control an operation of the air-conditioning apparatus based on the schedule operation signal and the presence/absence detection signal,
**characterized in that** when setting information regarding a schedule start time, a set temperature of the air-conditioning apparatus, and an operating state of the air-conditioning apparatus are input as the schedule, the schedule-related operation parts generate the schedule operation signal based on the setting information, and
wherein the air-conditioning control section (71) is configured
to increase the set temperature of the air-conditioning apparatus in a stepwise manner with time, when the operating state of the air-conditioning apparatus is a cooling operation state based on the schedule operation signal and the presence/absence detection signal indicates the absence of a person, and
to decrease the set temperature of the air-conditioning apparatus in a stepwise manner with time, when the operating state of the air-conditioning apparatus is a heating operation state based on the schedule operation signal and the presence/absence detection signal indicates the absence of a person.

2. The air-conditioning system of claim 1,
wherein the operation unit (301) includes a plurality of sensor-related operation parts configured to generate a sensor operation signal for operating the radiant energy measuring sensor (401),
wherein the controller (601) is configured
to perform setting for enabling an operation of the radiant energy measuring sensor (401) when operation enable information for enabling the operation of the radiant energy measuring sensor (401) is input via the sensor-related operation parts,
to perform setting for disabling the operation of the radiant energy measuring sensor (401) when operation disable information for disabling the operation of the radiant energy measuring sensor (401) is input via the sensor-related operation parts, and
to perform the setting for disabling the operation of the radiant energy measuring sensor (401) for a disable time zone for which the operation of the radiant energy measuring sensor (401) is disabled when disable time zone information is input as the disable time zone via the sensor-related operation parts, and
wherein the radiant energy measuring sensor (401) does not generate the presence/absence detection signal when the setting for disabling the operation of the radiant energy measuring sensor (401) is performed.

3. The air-conditioning system of claim 2, further comprising
a storage unit (501) configured to store the presence/absence detection signal and the schedule operation signal,
wherein the controller (601) is configured
to supply the schedule operation signal to the storage unit (501) every time the setting information is updated,
to supply the presence/absence detection signal to the storage unit (501) for a predetermined period of time,
to correct the schedule start time based on the presence/absence detection signal stored in the storage unit (501) and the schedule operation signal stored in the storage unit (501), and
to transmit the schedule operation signal updated based on the corrected schedule start time to the air-conditioning apparatus from the transmission/reception unit (701).

4. The air-conditioning system of claim 2,
wherein the radiant energy measuring sensor (401) is configured to generate the presence/absence detection signal indicating the presence of a person when a temperature converted from radiant energy emitted from a person is equal to or higher than a preset threshold, and
to generate the presence/absence detection signal indicating the absence of a person when the temperature converted from the radiant energy emitted from the person is lower than the threshold.

5. The air-conditioning system of claim 2,
wherein the radiant energy measuring sensor (401) is configured to generate the presence/absence detection signal indicating the presence of a person when an illuminance converted from radiant energy emitted from illumination is equal to or higher than a preset threshold, and
to generate the presence/absence detection signal indicating the absence of a person when the illuminance converted from the radiant energy emitted from the illumination is lower than the threshold.

6. The air-conditioning system of any one of claims 3 to 5,
wherein the air-conditioning apparatus includes
a refrigerant circuit (12) through which a refrigerant circulates, the refrigerant circuit (12) including a compressor (51), a heat-source-side heat exchanger (53), expansion means (59a to 59f, 60), and a load-side heat exchanger (55) which are connected by a refrigerant pipe,
an indoor air-sending device (58a to 58f) configured to cause air to flow to the load-side heat exchanger (55), and
an outdoor air-sending device (58g) configured to cause air to flow to the heat-source-side heat exchanger (53), and
wherein the air-conditioning control section (71) is configured to control rotation speeds of the compressor (51), the indoor air-sending device (58a to 58f), and the outdoor air-sending device (58g).

## Patentansprüche

1. Klimatisierungssystem, umfassend:
eine Klimatisierungsfernsteuereinheit (73); und
ein Klimagerät, das gemäß einem Befehl von der Klimatisierungsfernsteuereinheit (73) gesteuert wird,
wobei die Klimatisierungsfernsteuereinheit Folgendes umfasst;
eine Betriebseinheit (301), die konfiguriert ist, zum Betreiben des Klimageräts ein Betriebssignal zu erzeugen,
einen Strahlungsenergiemesssensor (401), der konfiguriert ist, eine Anwesenheit oder eine Abwesenheit einer Person zu detektieren,
eine Sende-/Empfangs-Einheit (701), die konfiguriert ist, das Betriebssignal an das Klimagerät zu senden und ein Signal von dem Klimagerät zu empfangen, und
eine Steuerungseinheit (601), die konfiguriert ist, den Strahlungsenergiemesssensor (401) und die Sende-/Empfangs-Einheit (701) zu steuern,
wobei die Betriebseinheit (301) eine Vielzahl von zeitplanbezogenen Betriebsteilen umfasst, die konfiguriert sind, ein auf einen Zeitplan bezogenes Zeitplanbetriebssignal zu erzeugen,
wobei der Strahlungsenergiemesssensor (401) konfiguriert ist, die Anwesenheit oder die Abwesenheit einer Person zu detektieren und ein Anwesenheits-/Abwesenheits-Detektionssignal zu erzeugen, das ein Ergebnis einer Detektion der Anwesenheit oder der Abwesenheit einer Person darstellt,
wobei die Steuerungseinheit (601) konfiguriert ist, das Zeitplanbetriebssignal an das Klimagerät zu senden, und das Anwesenheits-/Abwesenheits-Detektionssignal an das Klimagerät zu senden,
wobei das Klimagerät einen Klimatisierungssteuerabschnitt umfasst, der konfiguriert ist, einen Betrieb des Klimageräts auf Basis des Zeitplanbetriebssignals und des Anwesenheits-/Abwesenheits-Signals zu steuern,
**dadurch gekennzeichnet,**
**dass**, wenn Einstellinformationen in Bezug auf eine Zeitplanstartzeit, eine eingestellte Temperatur des Klimageräts und einen Betriebszustand des Klimageräts als der Zeitplan eingegeben werden, die zeitplanbezogenen Betriebsteile das Zeitplanbetriebssignal auf Basis der Einstellinformationen erzeugen, und
wobei der Klimatisierungssteuerabschnitt (71) für Folgendes konfiguriert ist:
schrittweises Erhöhen der eingestellten Temperatur des Klimageräts mit der Zeit, wenn der Betriebszustand des Klimageräts ein Kühlbetriebszustand auf Basis des Zeitplanbetriebssignals ist, und das Anwesenheits-/Abwesenheits-Detektionssignal die Abwesenheit einer Person anzeigt, und
schrittweises Senken der eingestellten Temperatur des Klimageräts mit der Zeit, wenn der Betriebszustand des Klimageräts ein Heizbetriebszustand auf Basis des Zeitplanbetriebssignals ist, und das Anwesenheits-/Abwesenheits-Detektionssignal die Abwesenheit einer Person anzeigt.

2. Klimatisierungssystem nach Anspruch 1,
wobei die Betriebseinheit (301) eine Vielzahl von sensorbezogenen Betriebsteilen umfasst, die konfiguriert sind, ein Sensorbetriebssignal zum Betreiben des Strahlungsenergiemesssensors (401) zu erzeugen,
wobei die Steuerungseinheit (601) für Folgendes konfiguriert ist:
Ausführen eines Einstellens zum Aktivieren eines Betriebs des Strahlungsenergiemesssensors (401), wenn Betriebsaktivierungsinformationen zum Aktivieren des Betriebs des Strahlungsenergiemesssensors (401) über die sensorbezogenen Betriebsteile eingegeben werden,
Ausführen eines Einstellens zum Deaktivieren des Betriebs des Strahlungsenergiemesssensors (401), wenn Betriebsdeaktivierungsinformationen zum Deaktivieren des Betriebs des Strahlungsenergiemesssensors (401) über die sensorbezogenen Betriebsteile eingegeben werden, und
Ausführen des Einstellens zum Deaktivieren des Betriebs des Strahlungsenergiemesssensors (401) für eine Deaktivierungszeitzone, für die der Betrieb des Strahlungsenergiemesssensors (401) deaktiviert wird, wenn Deaktivierungszeitzoneninformationen als die Deaktivierungszeitzone über die sensorbezogenen Betriebsteile eingegeben werden, und
wobei der Strahlungsenergiemesssensor (401) das Anwesenheits-/Abwesenheits-Detektionssignal nicht erzeugt, wenn das Einstellen zum Deaktivieren des Betriebs des Strahlungsenergiemesssensors (401) ausgeführt wird.

3. Klimatisierungssystem nach Anspruch 2, ferner umfassend:
eine Speichereinheit (501), die konfiguriert ist, das Anwesenheits-/Abwesenheits-Detektionssignal und das Zeitplanbetriebssignal zu speichern,
wobei die Steuerungseinheit (601) konfiguriert ist,
das Zeitplanbetriebssignal der Speichereinheit (501) immer dann zuzuführen, wenn die Einstellinformationen aktualisiert werden,
das Anwesenheits-/Abwesenheits-Detektionssignal der Speichereinheit (501) eine vorbestimmte Zeit lang zuzuführen,
die Zeitplanstartzeit auf Basis des in der Speichereinheit (501) gespeicherten Anwesenheits-/Abwesenheits-Detektionssignals und des in der Speichereinheit (501) gespeicherten Zeitplanbetriebssignals zu korrigieren, und
das auf Basis der korrigierten Zeitplanstartzeit aktualisierte Zeitplanbetriebssignal von der Sende-/Empfangs-Einheit (701) an das Klimagerät zu senden.

4. Klimatisierungssystem nach Anspruch 2,
wobei der Strahlungsenergiemesssensor (401) konfiguriert ist,
das Anwesenheits-/Abwesenheits-Detektionssignal zu erzeugen, das die Anwesenheit einer Person anzeigt, wenn eine aus einer von einer Person emittierten Strahlungsenergie umgewandelte Temperatur gleich einem oder höher als ein voreingestellter Schwellenwert ist, und
das Anwesenheits-/Abwesenheits-Detektionssignal zu erzeugen, das die Abwesenheit einer Person anzeigt, wenn die aus der von der Person emittierten Strahlungsenergie umgewandelte Temperatur niedriger als der Schwellenwert ist.

5. Klimatisierungssystem nach Anspruch 2,
wobei der Strahlungsenergiemesssensor (401) konfiguriert ist,
das Anwesenheits-/Abwesenheits-Detektionssignal zu erzeugen, das die Anwesenheit einer Person anzeigt, wenn eine aus einer von einer Beleuchtung emittierten Strahlungsenergie umgewandelte Beleuchtungsstärke gleich einem oder höher als ein voreingestellter Schwellenwert ist, und
das Anwesenheits-/Abwesenheits-Detektionssignal zu erzeugen, das die Abwesenheit einer Person anzeigt, wenn die aus der von der Beleuchtung emittierten Strahlungsenergie umgewandelte Beleuchtungsstärke niedriger als der Schwellenwert ist.

6. Klimatisierungssystem nach einem der Ansprüche 3 bis 5,
wobei das Klimagerät Folgendes umfasst:
einen Kältemittelkreislauf (12), durch den ein Kältemittel zirkuliert, wobei der Kältemittelkreislauf (12) einen Kompressor (51), einen wärmequellenseitigen Wärmetauscher (53), Ausdehnungsmittel (59a bis 59f, 60) und einen lastseitigen Wärmetauscher (55) umfasst, die durch ein Kältemittelrohr verbunden sind,
eine Innen-Luftzuführungsvorrichtung (58a bis 58f), die konfiguriert ist, zu bewirken, dass Luft zum lastseitigen Wärmetauscher (55) strömt, und
eine Außen-Luftzuführungsvorrichtung (58g), die konfiguriert ist, zu bewirken, dass Luft zum wärmequellenseitigen Wärmetauscher (53) strömt, und
wobei der Klimatisierungssteuerabschnitt (71) konfiguriert ist, Drehzahlen des Kompressors (51), der Innen-Luftzuführungsvorrichtung (58a bis 58f) und der Außen-Luftzuführungsvorrichtung (58g) zu steuern.

## Revendications

1. Système de climatisation comprenant :
un dispositif de commande à distance de climatisation (73) ; et
un appareil de climatisation commandé conformément à une instruction en provenance du dispositif de commande à distance de climatisation (73) ;
dans lequel le dispositif de commande à distance de climatisation inclut :
une unité de fonctionnement (301) configurée de manière à générer un signal de fonctionnement destiné à faire fonctionner l'appareil de climatisation ;
un capteur de mesure d'énergie rayonnante (401) configuré de manière à détecter la présence ou l'absence d'une personne ;
une unité d'émission-réception (701) configurée de manière à transmettre le signal de fonctionnement à l'appareil de climatisation, et à recevoir un signal en provenance de l'appareil de climatisation ; et
un contrôleur (601) configuré de manière à commander le capteur de mesure d'énergie rayonnante (401) et l'unité d'émission-réception (701) ;
dans lequel l'unité de fonctionnement (301) inclut une pluralité de parties de fonctionnement connexe à une planification configurées de manière à générer un signal de fonctionnement planifié connexe à une planification ;
dans lequel le capteur de mesure d'énergie rayonnante (401) est configuré de manière à détecter la présence ou l'absence d'une personne, et à générer un signal de détection de présence/absence représentant un résultat de détection de la présence ou de l'absence d'une personne ;
dans lequel le contrôleur (601) est configuré de manière à transmettre le signal de fonctionnement planifié à l'appareil de climatisation, et à transmettre le signal de détection de présence/absence à l'appareil de climatisation ;
dans lequel l'appareil de climatisation inclut une section de commande de climatisation configurée de manière à commander un fonctionnement de l'appareil de climatisation sur la base du signal de fonctionnement planifié et du signal de détection de présence/absence ;
**caractérisé en ce que**, lorsque des informations de réglage concernant une heure de début planifiée, une température de consigne de l'appareil de climatisation, et un état de fonctionnement de l'appareil de climatisation, sont entrées en tant que la planification, les parties de fonctionnement connexe à la planification génèrent le signal de fonctionnement planifié sur la base des informations de réglage ; et
dans lequel la section de commande de climatisation (71) est configurée de manière à :
augmenter progressivement, au fil du temps, la température de consigne de l'appareil de climatisation, lorsque l'état de fonctionnement de l'appareil de climatisation est un état de fonctionnement de refroidissement basé sur le signal de fonctionnement planifié, et lorsque le signal de détection de présence/absence indique l'absence d'une personne ; et
diminuer progressivement, au fil du temps, la température de consigne de l'appareil de climatisation, lorsque l'état de fonctionnement de l'appareil de climatisation est un état de fonctionnement de chauffage basé sur le signal de fonctionnement planifié, et lorsque le signal de détection de présence/absence indique l'absence d'une personne.

2. Système de climatisation selon la revendication 1,
dans lequel l'unité de fonctionnement (301) inclut une pluralité de parties de fonctionnement connexe à un capteur configurées de manière à générer un signal de fonctionnement de capteur destiné à faire fonctionner le capteur de mesure d'énergie rayonnante (401) ;
dans lequel le contrôleur (601) est configuré de manière à :
mettre en oeuvre un réglage pour activer un fonctionnement du capteur de mesure d'énergie rayonnante (401) lorsque des informations d'activation de fonctionnement destinées à activer le fonctionnement du capteur de mesure d'énergie rayonnante (401) sont entrées par le biais des parties de fonctionnement connexe au capteur ;
mettre en oeuvre un réglage pour désactiver le fonctionnement du capteur de mesure d'énergie rayonnante (401) lorsque des informations de désactivation de fonctionnement du capteur de mesure d'énergie rayonnante (401) sont entrées par le biais des parties de fonctionnement connexe au capteur ; et
mettre en oeuvre le réglage pour désactiver le fonctionnement du capteur de mesure d'énergie rayonnante (401) pour un fuseau horaire de désactivation pour lequel le fonctionnement du capteur de mesure d'énergie rayonnante (401) est désactivé lorsque des informations de fuseau horaire de désactivation sont entrées, en tant que le fuseau horaire de désactivation, par le biais des parties de fonctionnement connexe au capteur ; et
dans lequel le capteur de mesure d'énergie rayonnante (401) ne génère pas le signal de détection de présence/absence lorsque le réglage pour désactiver le fonctionnement du capteur de mesure d'énergie rayonnante (401) est mis en oeuvre.

3. Système de climatisation selon la revendication 2, comprenant en outre :
une unité de stockage (501) configurée de manière à stocker le signal de détection de présence/absence et le signal de fonctionnement planifié ;
dans lequel le contrôleur (601) est configuré de manière à :
fournir le signal de fonctionnement planifié à l'unité de stockage (501) à chaque fois que les informations de réglage sont mises à jour ;
fournir le signal de détection de présence/absence à l'unité de stockage (501) pendant une période de temps prédéterminée ;
corriger l'heure de début planifiée sur la base du signal de détection de présence/absence stocké dans l'unité de stockage (501) et du signal de fonctionnement planifié stocké dans l'unité de stockage (501) ; et
transmettre le signal de fonctionnement planifié mis à jour sur la base de l'heure de début planifiée corrigée, à l'appareil de climatisation, à partir de l'unité d'émission-réception.

4. Système de climatisation selon la revendication 2,
dans lequel le capteur de mesure d'énergie rayonnante (401) est configuré de manière à générer le signal de détection de présence/absence indiquant la présence d'une personne, lorsqu'une température convertie à partir de l'énergie rayonnante émise par une personne est égale ou supérieure à un seuil prédéfini ; et
de manière à générer le signal de détection de présence/absence indiquant l'absence d'une personne, lorsque la température convertie à partir de l'énergie rayonnante émise par la personne est inférieure audit seuil.

5. Système de climatisation selon la revendication 2,
dans lequel le capteur de mesure d'énergie rayonnante (401) est configuré de manière à générer le signal de détection de présence/absence indiquant la présence d'une personne, lorsqu'un éclairement converti à partir de l'énergie rayonnante émise par un éclairage est égal ou supérieur à un seuil prédéfini ; et
à générer le signal de détection de présence/absence indiquant l'absence d'une personne, lorsque l'éclairement converti à partir de l'énergie rayonnante émise par l'éclairage est inférieur audit seuil.

6. Système de climatisation selon l'une quelconque des revendications 3 à 5,
dans lequel l'appareil de climatisation inclut :
un circuit de fluide frigorigène (12) à travers lequel circule un fluide frigorigène, le circuit de fluide frigorigène (12) incluant un compresseur (51), un échangeur de chaleur côté source de chaleur (53), un moyen de détente (59a à 59f, 60) et un échangeur de chaleur côté charge (55), lesquels sont reliés par un serpentin de réfrigération ;
un dispositif d'envoi d'air intérieur (58a à 58f) configuré de manière à faire circuler de l'air vers l'échangeur de chaleur côté charge (55) ; et
un dispositif d'envoi d'air extérieur (58 g) configuré de manière à faire circuler de l'air vers l'échangeur de chaleur côté source de chaleur (53) ; et
dans lequel la section de commande de climatisation (71) est configurée de manière à commander des vitesses de rotation du compresseur (51), du dispositif d'envoi d'air intérieur (58a à 58f) et du dispositif d'envoi d'air extérieur (58g).
